Europäisches Patentamt

(19) European Patent Office

Office européen des brevets

(11) Publication number: **0 075 013**
**B1**

(12) **EUROPEAN PATENT SPECIFICATION**

(45) Date of publication of patent specification: **12.07.89**

(51) Int. Cl.⁴: **G 01 C 19/64,** G 01 B 9/02

(21) Application number: **82901457.0**

(22) Date of filing: **31.03.82**

(86) International application number:
**PCT/US82/00400**

(87) International publication number:
**WO 82/03456 14.10.82 Gazette 82/25**

(54) FIBER OPTIC ROTATION SENSOR.

(73) Proprietor: **THE BOARD OF TRUSTEES OF THE LELAND STANFORD JUNIOR UNIVERSITY**
**Office of Technology and Licensing 105 Encina Hall Stanford University**
**Stanford California 94305 (US)**

(72) Inventor: **SHAW, Herbert John**
**719 Alvarado Row**
**Stanford, CA 94305 (US)**
Inventor: **LEFEVRE, Herve C.**
**992 Moreno Avenue**
**Palo Alto, CA 94303 (US)**
Inventor: **BERGH, Ralph Alan**
**992 Moreno Avenue**
**Palo Alto, CA 94303 (US)**

(74) Representative: Rushton, Ronald et al
**SOMMERVILLE & RUSHTON 11 Holywell Hill**
**St. Albans Hertfordshire AL1 1EZ (GB)**

(30) Priority: **31.03.81 US 249714**
**30.09.81 US 307095**
**09.11.81 US 319311**

(43) Date of publication of application:
**30.03.83 Bulletin 83/13**

(45) Publication of the grant of the patent:
**12.07.89 Bulletin 89/28**

(84) Designated Contracting States:
**AT BE CH DE FR GB LI LU NL SE**

(56) References cited:
FR-A-2 446 482
US-A-3 862 803
US-A-4 283 144
US-A-4 299 490

OPTICS LETTERS, vol. 5, no. 1, January 1979, pages 29-31, New York, US; S.K. SHEEM et al.: "Single-mode fiber-optical power divider: encapsulated etching technique"

ELECTRONICS LETTERS, volume 16, no. 20, issued 25 September 1980 (London, England). H.C. LEFEVRE: "Single-Mode Fibre Fractional Wave Devices and Polarization Controllers", pages 778-780

(56) References cited:
OPTICS LETTERS, volume 5, no. 5, issued May 1980 (New York, New York). R. ULRICH: "Fiber-Optic Rotation Sensing With Low Drift", pages 173-175

Courier Press, Leamington Spa, England.

**Description**

Background of the invention

The present invention relates to rotation sensors, such as for use in gyroscopes, and particularly to a fiber optic rotation sensor.

Fiber optic rotation sensors typically comprise a loop of fiber optic material to which light waves are coupled for propagation around the loop in opposite directions. Rotation of the loop creates a relative phase difference between counterpropagating waves, in accordance with the well known "Sagnac effect," with the amount of phase difference corresponding to the velocity of rotation. The counterpropagating waves, when recombined, interfere constructively or destructively to produce an optical output signal which varies in intensity in accordance with the rotation rate of the loop. Rotation sensing is commonly accomplished by detection of this optical output signal.

Systems of this type have heretofore employed bulk optical components for processing and directing the light applied to the sensing loop. While these devices provide a substantial improvement over other types of rotation sensors, they are subject to certain limitations and other disadvantages. For example, the various system components must be aligned with each other within very close tolerances for the system to function properly. This critical alignment is often difficult to establish and maintain, particularly where the system is subjected to mechanical vibration, thermal changes, and other physical disturbances.

Rotation sensors utilising the Sagnac effect for rotation sensing typically require a compensating system to provide operating stability. One type of compensating system is described by R. Ulrich in an article entitled "Fiber Optic Rotation Sensing with Low Drift" (Optics Letters, May 1980, Vol. 5, No. 5). This approach involves modulating the counter propagating light waves and detecting the optical output wave at the modulation frequency. However, such modulation, due to imperfections in the modulator, tends to produce amplitude modulation in the counter propagating waves and thus, in the optical output signal. This amplitude modulation may be caused directly by the modulating device, or it may be a manifestation of polarization modulation caused by the mechanical action of the modulating device upon the fiber. In any event, such amplitude modulation is disavantageous since it distorts the optical output signal, and thus, decreases the accuracy of the rotation sensor.

Another rotation sensor utilizing the Sagnac effect for rotation sensing is disclosed in FR—A—2446482, to Ulrich, assigned to Max-Planck Gesellschaft. This method for measuring the rotation rate of a rotating light described in this reference is based on the Faraday effect. A solenoid is wound around the loop of an optical fiber and creates a phase bias when a current circulates through the solenoid. By processing the current through the solenoid, the total phase shift in the interferometer is maintained to zero or to some constant value. The intensity of the exciting electric current shows a linear dependency with the phase shift caused by the rotation. The rotation sensor disclosed by Ulrich in this disclosure therefore must comprise both a phase modulator and a Faraday solenoid and also requires that the light beams in the fiber be uniformly circularly polarized, at least inside the solenoid. Furthermore, the optical fiber wave guide includes several splices that contribute to a loss of light in the optical wave guide. Further limitations arise from the influence of ambient magnetic fields such as the earth's magnetic field.

Summary of the invention

The present invention solves these and other problems of the prior art by providing an all-fiber optic rotation sensor which comprises a light source for producing a light wave, an optical fiber waveguide forming a line portion and a loop portion, the light source being optically coupled to the line portion for propagation of the lightwave through the line portion to the loop portion, a first evanescent field fiber optic directional coupler connected between the light source and the loop, the first coupler closing the loop portion and coupling the loop portion and the line portion, a portion of the optical waveguide forming a polarization controller for controlling the polarization of light propagating in the loop portion. The rotation sensor of the present invention further comprises a polarizer to cause light propagating through the optical fiber waveguide to be polarized to a preselected polarization, means for coupling light from a further line portion to provide an output signal indicative of the rotation rate of the loop portion, the polarizer passing only the portion of the light coupled to the further line position from the loop portion by the directional coupler, the portion of the light traveling an identical optical path through the loop portion to the coupling means so that nonrotationally-induced phase differences in the output signal are eliminated, a phase modulator for modulating the phase of light in the loop portion at a specific frequency, a detector positioned to receive the output signal from the coupling means for detecting the output signal to determine the rotation rate of the loop. The novel inventive concept of the present invention resides in that the optical fiber waveguide comprises a single, continuous, uninterrupted strand of optical fiber, the single, continuous, uninterrupted strand of optical fiber having a portion of the cladding removed from one side thereof to form a first oval surface, the polarizer comprising a birefringent crystal juxtaposed against the first oval surface to cause light propagating through the strand to be linearly polarized, and in that the phase modulator further introduces an amplitude modulation in light propagating through the loop portion, and the specific frequency being selected to eliminate errors in the output signal caused by the amplitude modulation, the optic rotation sensor further comprising a detection system for detecting only

2

an odd harmonic of the output signal, the specific frequency causing the odd harmonic frequency components of the amplitude modulation to cancel.

The single, continuous, uninterrupted strand of optical fiber preferably has a portion of the cladding removed from one side of the fiber at the ends of the loop portion to form second and third oval surfaces, the second and third oval surfaces being juxtaposed and optically closing the loop portion to form the directional coupler.

The coupling means may comprise an optical isolator or a second evanescent field fiber optic directional coupler.

The rotation sensor of the present invention preferentially comprises a means for guiding the output signal from the coupling means to the detector, which may comprise a lens or an optical fiber. The loop portion is advantageously wrapped for a plurality of turns about a support, with the central turns being positioned innermost adjacent to the support and the turns toward the ends of the loop being positioned outermost away from the support so that both end portions of the strand forming the loop are positioned symmetrically about the central turns and are freely accessible at the outside of the loop.

The specific frequency preferably equals C/2nL, where L is the differential length measured along the fiber between (a) the phase modulator and one end of the loop portion and (b) the phase modulator and the other end of the loop portion, C is the free space velocity of light, and n is the equivalent refractive index for the optical fiber.

As to the amplitude modulation, it is advantageously caused directly by the phase modulator or by polarization modulation induced by the phase modulator.

It is preferable that the detection system detect only the fundamental frequency of the output signal and that it comprises an amplifier for providing a narrow bandpass filter characteristic at the specific frequency and a lock-in amplifier synchronized to the phase modulator.

The specific frequency is generally selected, with reference to the length L, to provide a modulation phase difference of 180° between lightwaves propagating through the loop portion.

In one embodiment of the present invention, the rotation sensor additionally comprises a shield for shielding the loop of fiber optic material from an ambient magnetic field to reduce the effects of the magnetic field on the light propagating through the loop portion. That shield may comprise a housing for the loop portion, the housing made from a magnetically permeable material.

In another embodiment of the present invention, it is advantageous that a portion of the loop portion forms plural coils, the diameter of the coils being selected to stress the fiber to provide a birefringent medium to form the polarization controller for controlling the polarization of light propagating to the loop portions.

The present invention additionally discloses a method of manufacturing a rotation sensor, comprising the steps of providing an optical fiber waveguide, providing a first evanescent field fiber optic directional coupler, removing a portion of the cladding from the optical fiber waveguide in at least three locations along the optical fiber waveguide to provide at least three coupling regions, juxtaposing two of the coupling regions to form a closed loop in the optical fiber waveguide, coupling a light source to the optical fiber waveguide for propagating light to the loop in order to form a pair of waves which counterpropagate about the loop, and inserting a polarization controller in the loop for controlling the polarization of the pair of waves counterpropagating about the loop. This method further comprises the steps of providing a polarizer to cause light propagating through the optical fiber waveguide to be polarized to a preselected polarization, providing a phase modulator for modulating the phase of light in the loop portion at a specific frequency, and positioning a detector to detect the phase difference between only those portions of the counterpropagating waves which travel identical optical path lengths about the loop and to provide an output signal indicative of the rotation rate of the loop. The novel inventive concept of the present invention regarding this method of manufacturing a rotation sensor resides in that the step of providing an optical fiber waveguide comprises providing a single, continuous, uninterrupted strand of optical fiber, in that the step of providing a polarizer comprises juxtaposing a birefringent crystal with a third of the coupling regions to cause light propagating through the strand to be linearly polarized, and in that the step of providing a phase modulator comprises selecting a specific frequency to eliminate errors in the output signal caused by amplitude modulation introduced by the phase modulator, and in that the step of providing a detector comprises detecting only an odd harmonic of the output signal.

Preferably, the step of inserting the polarization controller comprises forming plural coils in the continuous fiber strand which have diameters sufficiently small to create stress-induced birefringence to control the polarization of the counterpropagating waves.

Brief description of the drawings

These and other advantages of the present invention are best understood with reference to the drawings in which:

Figure 1 is a schematic drawing of the rotation sensor of the present invention showing the fiber optic components positioned along a continuous, uninterrupted strand of fiber optic material, and further showing the signal generator, photodetector, lock-in amplifier and display associated with the detection system;

Figure 2 is a sectional view of one embodiment of a fiber optic directional coupler for use in the rotation sensor of Figure 1;

Figure 3 is a sectional view of one embodiment of a fiber optic polarizer for use in the rotation sensor of Figure 1;

Figure 4 is a perspective view of one embodiment of a fiber optic polarization controller for use in the rotation sensor of Figure 1;

Figure 5 is a schematic diagram of the rotation sensor of Figure 1 with the polarizer, polarization controllers, and phase modulator removed therefrom;

Figure 6 is a graph of the intensity of the optical output signal, as measured by the photo detector, as a function of the rotationally induced Sagnac phase difference, illustrating the effects of birefringence induced phase differences and birefringence induced amplitude fluctuations;

Figure 7 is a graph of phase difference as a function of time showing the phase modulation of each of the counterpropagating waves and the phsae difference between the counterpropagating waves;

Figure 8 is a schematic drawing illustrating the effect of the phase modulation upon the intensity of the optical output signal, as measured by the detector, when the loop is at rest;

Figure 9 is schematic drawing showing the effect of the phase modulation upon the intensity of the optical output signal, as measured by the detector, when the loop is rotating;

Figure 10 is a graph of the amplifier output signal as a function of the rotationally induced Sagnac phase difference, illustrating an operating range for the rotation sensor of Figure 1;

Figure 11 is a simplified schematic drawing of the loop portion of the rotation sensor of Figure 1, for illustrating the effect of the earth's magnetic field on the counter-propagating waves;

Figure 12 is a schematic drawing of a housing for enclosing the sensing loop to shield it from ambient magnetic fields;

Figure 13 is a schematic drawing of the relation sensor of Figure 1 with an optical isolator included to prevent the optical output signal from reaching the light source, and showing the photodetector positions to detect the light rejected by the isolator so that a coupler is not needed to extract the optical output signal from the continuous fiber strand;

Figure 14 is a schematic diagram of the light source and optical isolator showing the effect of the isolator upon light propagating from the source towards the sensing loop;

Figure 15 is a schematic diagram, similar to that of Figure 14, showing the effect of the optical isolator on the optical output signal as it returns from the loop and propagates towards the source;

Figure 16 is a perspective view showing the preferred manner of wrapping an optical fiber to form a magneto-optic rotator; and

Figure 17 is a schematic drawing of the embodiment of a magneto-optic rotator for use in the optical isolator shown in Figure 13.

Detailed description of the preferred embodiment

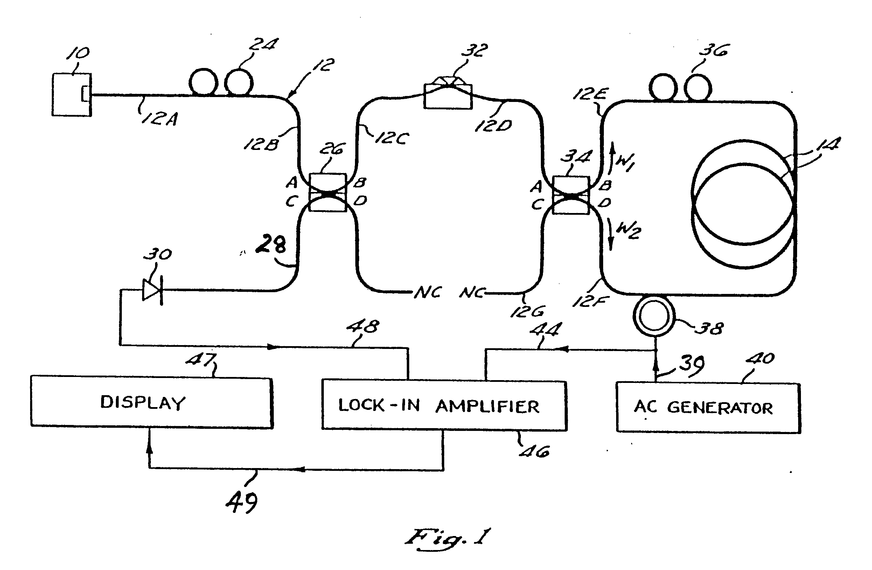

As shown in Figure 1, the rotation sensor of the present invention comprises a light source 10 for introducing light into a continuous length or strand of optical fiber 12, a portion of which is wound into a sensing loop 14. As used herein, the reference numeral 12 desginates generally the entire continuous strand of optical fiber, while the numeral 12 with letter suffixes (A, B, C, etc.) designates portions of the optical fiber 12.

In the embodiment shown, the light source 10 comprises a gallium arsenide (GaAs) laser which produces light having a wave length on the order of 0.82 microns. By way of specific example, the light source 10 may comprise a model GO-DIP laser diode, commercially available from General Optronics Corp., 3005 Hadley Rd., South Plainfield, New Jersey. The fiber optic strands, such as the strand 12, are preferably single mode fibers having, for example, an outer diameter of 80 microns and a core diameter of 4 microns. The loop 14 comprises a plurality of turns of the fiber 12, wrapped about a spool of other suitable support (not shown). By way of specific example, the loop 14 may have approximately 1000 turns of fiber wound on a form having a diameter of 14 centimeters.

Preferably, the loop 14 is wound symmetrically, starting from the center, so that symmetrical points in the loop 14 are in proximity. Specifically, the fiber is wrapped about the spool so that the turns of the central portion of the loop 14 are positioned innermost adjacent to the spool and the turns toward the ends of the loop are positioned outermost away from the spool so that both end portions of the fiber loop 14 are positioned symmetrically about the central turns and are freely accessible at the outside of the loop 14. It is believed that this reduces the environmental sensitivity of the rotation sensor, since such symmetry causes time varying temperature and pressure gradients to have a similar effect on both of the counterpropagating waves.

Light from the source 10 is optically coupled to one end of the fiber 12 by butting the fiber 12 against the light source 10. Various components for guiding and processing the light are positioned or formed at various locations along the continuous strand 12. For the purpose of describing the relative locations of these components, the continuous fiber 12 will be described as being divided into seven portions, labeled 12A through 12G, respectively, with the portion 12A through 12E being on the side of the loop 14 that is coupled to the source 10, and the portions 12F and 12G being on the opposite side of the loop 14.

Adjacent to the light source 10, between the fiber portions 12A and 12B is a polarisation controller 24. A

4

suitable type of polarization controller for use as the controller 24 is described in the 25 September 1980 issue of Electronics Letters (Vol. 16, No. 20). A description of the polarization controller 24 will be provided subsequently, however, it should be presently understood that this controller 24 permits adjustment of both the state and direction of polarization of the applied light.

The fiber 12 then passes through ports, labeled A and B, of a directional coupler 26, located between the fiber portions 12B and 12C, for coupling optical power to a second strand of optical fiber 28 which passes through the ports labeled C and D of the coupler 26, the port C being on the same side of the coupler as the port A, and the port D being on the same side of the coupler as the port B. The end of the fiber 28 extending from the port D terminates non-reflectively at the point labeled "NC" (for "not connected") while the end of the fiber 28 extending from the port C is optically coupled to a photodetector 30. By way of specific example, the photodetector 30 may comprise a standard, reverse biased, silicon, PIN-type, photo diode. A coupler suitable for use in the present invention is described in detail in the 27 March 1980 issue of Electronics Letters (Vol. 16, No. 7).

The fiber portion 12C, extending from the port B of the coupler 26 passes through a polarizer 32, located between the portions 12C and 12D. The polarizer 32 permits passage of light in one of the polarization modes of the fiber 12, while preventing passage of light in the other polarization mode. Preferably, the polarization controller 24 is utilized to adjust the polarization of the applied light so that such polarization is substantially the same as that passed by the polarizer 32. This reduces loss of optical power as the applied light propagates through the polarizer. A suitable type of polarizer for the use in the present invention is described in the November 1980 issue of Optics Letters (Vol. 5, No. 11).

After passing through the polarizer 32, the fiber 12 passes through ports, labeled A and B, of a directional coupler 34, located between the fiber portions 12D and 12E. This coupler 34 is preferably of the same type as described above in reference to the coupler 26. The fiber 12 is then wound into the loop 14, with a polarization controller 36 located between the loop 14 and fiber portion 12E. This polarization controller 36 may be of the type discussed in reference to the controller 24, and is utilized to adjust the polarization of the waves counterpropagating through the loop 14 so that the optical output signal, formed by superposition of these waves, has a polarization which will be efficiently passed, with minimal optical power loss, by the polarizer 32. Thus, by utilizing both the polarization controllers 24, 36, the polarization of the light propagating through the fiber 12 may be adjusted for maximum optical power.

A modulator 38, driven by an AC generator 40, and connected thereto by a line 39, is mounted on the fiber 12, between the loop 14 and the fiber portion 12F. This modulator 38 comprises a PZT cylinder, around which the fiber 12 is wrapped. The fiber 12 is bonded to the cylinder so that when it expands radially in response to the modulating signal from the generator 40, it stretches the fiber 12. An alternative type of modulator (not shown), suitable for use with the present invention, comprises a PZT cylinder which longitudinally stretches four segments of the fiber 12 bonded to short lengths of capillary tubing at the ends of the cylinder. Those skilled in the art will recognize that this alternative type of modulator may impart a lesser degree of polarization modulation to the propagating optical signal than the modulator 38, however, it will be seen subsequently that the modulator 38 may be operated at a frequency which eliminates the undesirable effects of polarization modulation. Thus, either type of modulator is suitable for use in the present invention.

The fiber 12 then passes through ports, labeled C and D of the coupler 34, with the fiber portion 12F extending from the port D and the fiber portion 12G extending from the port C. Fiber portion 12G terminates non-reflectively at a point labeled "NC" (for "not connected"). The output signal from the AC generator 40 is supplied on a line 44 to a lock-in amplifier 46, which also is connected to receive the output of the photodetector 30 by a line 48. This signal to the amplifier 46 provides a reference signal for enabling the amplifier 46 to synchronously detect the detector output signal at the modulation frequency. Thus, the amplifier 46 effectively provides a band pass filter at the fundamental frequency (i.e., first harmonic) of the modulator 38, blocking all other harmonics of this frequency. It will be seen below that the magnitude of this first harmonic component of the detector output signal is proportional, through an operating range, to the rotation rate of the loop 14. The amplifier 46 outputs a signal, which is proportional to this first harmonic component, and thus provides a direct indication of the rotation rate, which may be visually displayed on a display panel 47 by supplying the amplifier output signal to the display 47 on a line 49.

## The couplers 26 and 34

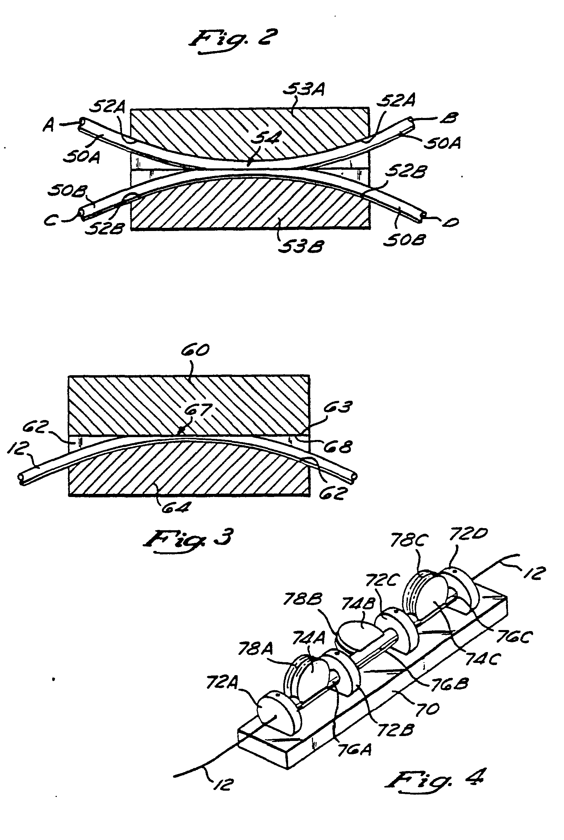

A preferred fiber optic directional coupler for use as the couplers 26 and 34 in the rotation sensor or gyroscope of the present invention is illustrated in Figure 2. The coupler includes two strands 50A and 50B of a single mode fiber optic material mounted in longitudinal arcuate grooves 52A and 52B, respectively, formed in optically flat, confronting surfaces of rectangular bases or blocks 53A and 53B, respectively. The block 53A with the strand 50A mounted in the groove 52A will be referred to as the coupler half 51A, and the block 53B with the strand 50B mounted in the groove 52B will be referred to as the coupler half 51B.

The arcuate grooves 52A and 52B have a radius of curvature which is very large compared to the diameter of the fibers 50, and have a width slightly larger than the fiber diameter to permit the fibers 50, when mounted therein, to conform to a path defined by the bottom walls of the grooves 52. The depth of the grooves 52A and 52B varies from a minimum at the center of the blocks 53A and 53B, respectively, to a maximum at the edges of the blocks 53A and 53B, respectively. This advantageously permits the fiber optic strands 50A and 50B, when mounted in the grooves 52A and 52B, respectively, to gradually converge toward the center and diverge toward the edges of the blocks 53A, 53B, thereby eliminating any sharp bends or abrupt changes in direction of the fibers 50 which may cause power loss through mode perturbation. In the embodiment shown, the grooves 52 are rectangular in cross-section, however, it will be understood that other suitable cross-sectional contours which will accommodate the fibers 50 may be used alternatively, such as a U-shaped cross-section or a V-shaped cross-section.

At the centers of the blocks 53, in the embodiment shown, the depth of the grooves 52 which mount the strands 50 is less than the diameter of the strands 50, while at the edges of the blocks 53, the depth of the grooves 52 is preferably at least as great as the diameter of the strands 50. Fiber optic material was removed from each of the strands 50A and 50B, e.g. by lapping, to form respective oval-shaped planar surfaces, which are coplanar with the confronting surfaces of the blocks 53A, 53B. These oval surfaces, where the fiber optic material has been removed, will be referred to herein as the fiber "facing surfaces". Thus, the amount of fiber optic material removed increases gradually from zero towards the edges of the blocks 53 to a maximum towards the center of the blocks 53. This tapered removal of the fiber optic material enables the fibers to converge and diverge gradually, which is advantageous for avoiding backward reflection and excess loss of light energy.

In the embodiment shown, the coupler halves 51A and 51B are identical, and are assembled by placing the confronting surfaces of the blocks 53A and 53B together, so that the facing surfaces of the strands 50A and 50B are in facing relationship.

An index matching substance (not shown), such as index matching oil, is provided between the confronting surface of the blocks 53. This substance has a refractive index approximately equal to the refractive index of the cladding, and also functions to prevent the optically flat surfaces 14 from becoming permanently locked together. The oil is introduced between the blocks 53 by capillary action.

An interaction region 54 is formed at the junction of the strands 50, in which light is transferred between the strands by evanescent field coupling. It has been found that, to ensure proper evanescent field coupling, the amount of material removed from the fibers 50 must be carefully controlled so that the spacing between the core portions of the strands 50 is within a predetermined "critical zone". The evanescent fields extend into the cladding and decrease rapidly with distance outside their respective cores. Thus, sufficient material should be removed to permit each core to be positioned substantially within the evanescent field of the other. If too little material is removed, the cores will not be sufficiently close to permit the evanescent fields to cause the desired interaction of the guided modes, and thus, insufficient coupling will result. Conversely, if too much material is removed, the propagation characteristics of the fibers will be altered, resulting in loss of light energy due to mode perturbation. However, when the spacing between the cores of the strands 50 is within the critical zone, each strand receives a significant portion of the evanescent field energy from the other strand, and good coupling is achieved without significant energy loss. The critical zone includes that area in which the evanescent fields of the fibers 50A and 50B overlap with sufficient strength to provide coupling, i.e., each core is within the evanescent field of the other. However, as previously indicated, mode perturbation occurs when the cores are brought too close together. For example, it is believed that, for weakly guided modes, such as the $HE_{11}$ mode in single mode fibers, such mode perturbation begins to occur when sufficient material is removed from the fibers 50 to expose their cores. Thus, the critical zone is defined as that area in which the evanescent fields overlap with sufficient strength to cause coupling without substantial mode perturbation induced power loss.

The extent of the critical zone for a particular coupler is dependent upon a number of interrelated factors such as the parameters of the fiber itself and the geometry of the coupler. Further, for a single mode fiber having a step-index profile, the critical zone can be quite narrow. In a single mode fiber coupler of the type shown, the required center-to-center spacing between the strands 50 at the center of the coupler is typically less than a few (e.g., 2—3) core diameters.

Preferably, the strands 50A and 50B (1) are identical to each other (2) have the same radius of curvature at the interaction region 54; and (3) have an equal amount of fiber optic material removed therefrom to form their respective facing surfaces. Thus, the fibers 50 are symmetrical, through the interaction region 54, in the plane of their facing surfaces, so that their facing surfaces are coextensive if superimposed. This ensures that the two fibers 50A and 50B will have the same propagation characteristics at the interaction region 54, and thereby avoids coupling attenuation associated with dissimilar propagation characteristics.

The blocks or bases 53 may be fabricated of any suitable rigid material. In one presently preferred embodiment, the bases 53 comprise generally rectangular blocks of fused quartz glass approximately 2.54 centimeters long (1 inch), 2.54 centimeters wide (1 inch) and 1.02 centimeters thick (0.4 inch). In this embodiment, the fiber optic strands 50 are secured in the slots 52 by suitable cement, such as epoxy glue. One advantage of the fused quartz blocks 53 is that they have a coefficient of thermal expansion similar to that of glass fibers, and this advantage is particularly important if the blocks 53 and fibers 50 are subjected to any heat treatment during the manufacturing process. Another suitable material for the block 53 is silicon, which also has excellent thermal properties for this application.

The coupler includes four ports, labeled A, B, C and D in Figure 2. When viewed from the perspective of Figure 2, ports A and C, which correspond to strands 50A and 50B, respectively, are on the left-hand side of the coupler, while the ports B and D, which correspond to the strands 50A and 50B, respectively, are on the right-hand side of the coupler. For the purposes of discussion, it will be assumed that input light is applied to port A. This light passes through the coupler and is output at port B and/or port D, depending upon the amount of power that is coupled between the strands 50. In this regard, the term "normalized coupled power" is defined as the ratio of the coupled power to the total output power. In the above example, the normalized coupled power would be equal to the ratio of the power of port D to the sum of the power output at ports B and D. This ratio is also referred to as the "coupling efficiency", and when so used is typically expressed as a percent. Thus, when the term "normalized coupled power" is used herein, it should be understood that the corresponding coupling efficiency is equal to the normalized coupled power times 100. In this regard, tests have shown that the coupler of the type shown in Figure 2 has a coupling efficiency of up to 100%. However, the coupler may be "tuned" to adjust the coupling efficiency to any desired value between zero and the maximum, by offsetting the facing surfaces of the blocks 53. Such tuning is preferably accomplished by sliding the blocks 53 laterally relative to each other.

The coupler is highly directional, with substantially all of the power applied at one side of the coupler being delivered to the other side of the coupler. That is, substantially all of the light applied to input Port A is delivered to the output Ports B and D, without contra-directional coupling to Port C. Likewise, substantially all of the light applied to input Port C is delivered to the output Ports B and D. Further, this directivity is symmetrical. Thus, light supplied to either input Port B or input Port D is delivered to the output Ports A and C. Moreover, the coupler is essentially non-discriminatory with respect to polarization, and thus, preserves the polarization of the coupled light. Thus, for example, if a light beam having a vertical polarization is input to Port A, the light coupled from Port A to Port D, as well as the light passing straight through from Port A to Port B, will remain vertically polarized.

From the foregoing, it can be seen that the coupler may function as a beam-splitter to divide the applied light into two counter-propagating waves W1, W2 (Figure 1). Further, the coupler may additionally function to recombine the counter-propagating waves after they have traversed the loop 14 (Figure 1).

In the embodiment shown, each of the couplers 26, 34 has a coupling efficiency of fifty percent, as this choice of coupling efficiency provides maximum optical power at the photodetector 30 (Figure 1). As used herein, the term "coupling efficiency" is defined as the power ratio of the coupled power to the total output power, expressed as a percent. For example, referring to Figure 2, if light is applied to Port A, the coupling efficiency would be equal to the ratio of the power at Port D to the sum of the power output at Ports B and D. Further, a coupling efficiency of 50% for the coupler 34 insures that the counterpropagating waves W1, W2 are equal in magnitude.

The polarizer 32

A preferred polarizer for use in the rotation sensor of Figure 1 is illustrated in Figure 3. This polarizer includes a birefringent crystal 60, positioned within the evanescent field of light transmitted by the fiber 12. The fiber 12 is mounted in a slot 62 which opens to the upper face 63 of a generally rectangular quartz block 64. The slot 62 has an arcuately curved bottom wall, and the fiber is mounted in the slot 62 so that it follows the contour of this bottom wall. The upper surface 63 of the block 64 is lapped to remove a portion of the cladding from the fiber 12 in a region 67. The crystal 60 is mounted on the block 64, with the lower surface 68 of the crystal facing the upper surface 63 of the block 64, to position the crystal 60 within the evanescent field of the fiber 12.

The relative indices of refraction of the fiber 12 and the birefringent material 60 are selected so that the wave velocity of the desired polarization mode is greater in the birefringent crystal 60 than in the fiber 12, while the wave velocity of an undesired polarization mode is greater in the fiber 12 than in the birefringent crystal 60. The light of the desired polarization mode remains guided by the core portion of the fiber 12, whereas light of the undesired polarization mode is coupled from the fiber 12 to the birefringent crystal 60. Thus, the polarizer 32 permits passage of light in one polarization mode, while preventing passage of light in the other polarization mode. As previously indicated, the polarization controllers 24, 36 (Figure 1) may be utilized to adjust the polarizations of the applied light and optical output signal, respectively, so that optical power loss through the polarizer is minimized.

The polarization controllers 24, 36

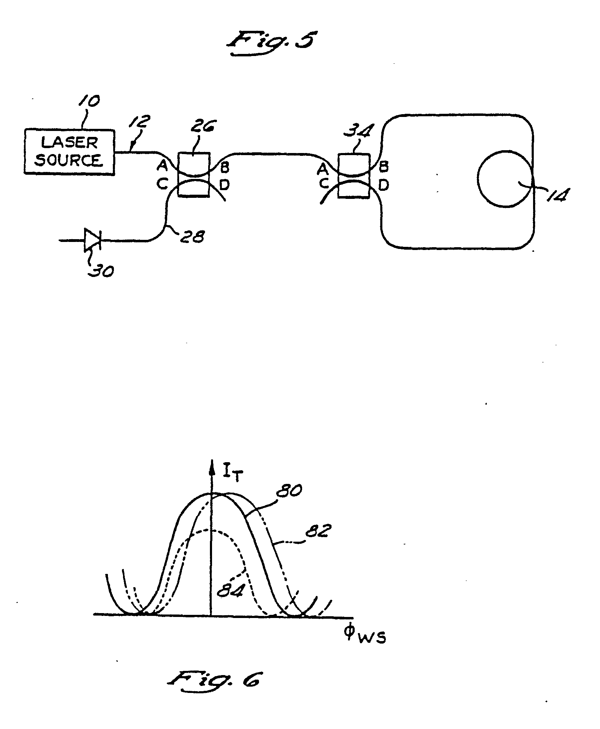

One type of polarization controller suitable for use in the rotation sensor of Figure 1 is illustrated in Figure 4. The controller includes a base 70 on which a plurality of upright blocks 72A through 72D are mounted. Between adjacent ones of the block 72, spools 74A through 74C are tangentially mounted on shafts 76A through 76C, respectively. The shafts 76 are axially aligned with each other, and are rotatably mounted between the blocks 72. The spools 74 are generally cylindrical and are positioned tangentially to the shafts 76, with the axes of the spools 74 perpendicular to the axes of the shafts 76. The strand 12 extends through axial bores in the shafts 76 and is wrapped about each of the spools 74 to form three coils 78A through 78C. The radii of the coil 78 are such that the fiber 12 is stressed to form a birefringent medium in each of the coils 78. The three coils 78A through 78C may be rotated independently of each other about the axes of the shafts 74A through 74C, respectively, to adjust the birefringence of the fiber 12 and, thus, control the polarization of the light passing through the fiber 12.

The diameter and number of turns in the coil 78 are such that the outer coils 78A and C provide a spatial delay of one-quarter wavelength, while the central coil 78D provides a spatial delay of one-half wavelength. The quarter wavelength coils 78A and C control the elipticity of the polarization, and the half wavelength coil 78B controls the direction of polarization. This provides a full range of adjustment of the polarization of the light propagating through the fiber 12. It will be understood, however, that the polarization controller may be modified to provide only the two quarter wave coils 78A and C, since the direction of polarization (otherwise provided by the central coil 78B) may be controlled indirectly through proper adjustment of the elipticity of polarization by means of the two quarter wave coils 78A and C. Accordingly, the polarization controllers 24 and 36 are shown in Figure 1 as including only the two quarter wave coils 78A and C. Since this configuration reduces the overall size of the controllers 24—36, it may be advantageous for certain applications of the present invention involving space limitations.

Thus, the polarization controllers 24 and 36 provide means for establishing, maintaining and controlling the polarization of both the applied light and the counter-propagating waves.

Operation without phase modulation of polarization control

In order to fully understand the function and importance of the polarizer 32 (Figure 1) and phase modulator 38, the operation of the rotation sensor will first be described as if these components had been removed from the system. Accordingly, Figure 5 shows the rotation sensor of Figure 1, in schematic block diagram form, with the modulator 38, polarizer 32, and associated components removed therefrom.

Light is coupled from the laser source 10 to the fiber 12 for propagation therethrough. The light enters Port A of the coupler 26, where a portion of the light is lost through Port D. The remaining portion of the light propagates from Port B to Port A of the coupler 34, where it is split into two counter-propagating waves W1, W2 of equal amplitude. The wave W1 propagates from the Port B in a clockwise direction about the loop 14, while the wave W2 propagates from Port D in a counter-clockwise direction around the loop 14. After the waves W1, W2 have traversed the loop 14, they are recombined by the coupler 34 to form an optical output signal, which propagates from Port A of the coupler 34 to Port B of the coupler 26. A portion of the optical output signal is coupled from Port B to Port C of the coupler 26 for propagation along the fiber 28 to the photodetector 30. This photodetector 30 outputs an electrical signal which is proportional to the intensity of the light impressed thereon by the optical output signal.

The intensity of the optical output signal will vary in accordance with the amount and type (i.e., constructive or destructive) of interference between the waves W1, W2 when they are recombined or super-posed at the coupler 34. Ignoring, for the moment, the effects of fiber birefringence, the waves W1, W2 travel the same optical path around the loop 14. Thus, assuming the loop 14 is at rest, when the waves W1, W2 are recombined at the coupler 34, they will interfere constructively, with no phase difference therebetween, and the intensity of the optical output signal will be at a maximum. However, when the loop 14 is rotated, the counter-propagating waves W1, W2 will be shifted in phase, in accordance with the Sagnac effect, so that when they are superposed at the coupler 34, they destructively interfere to reduce the intensity of the optical output signal. Such Sagnac phase difference between the waves W1, W2, caused by rotation of the loop 14, is defined by the following relationship:

$$\phi_{ws} = \frac{8\pi NA}{\lambda c}\Omega \tag{1}$$

Where A is the area bounded by the loop 14 of optical fiber, N is the number of turns of the optical fiber about the area A, $\Omega$ is the angular velocity of the loop about an axis which is perpendicular to the plane of the loop, and $\lambda$ and c are the free space values of the wave length and velocity, respectively, of the light applied to the loop.

The intensity of the optical output signal ($I_T$) is a function of the Sagnac phase difference ($\phi_{ws}$) between the waves W1, W2, and is defined by the following equation:

$$I_T = I_1 + I_2 + 2\sqrt{I_1 I_2}\ \mathrm{Cos}\phi_{ws} \tag{2}$$

where $I_1$ and $I_2$ are the individual intensities of the waves W1, W2, respectively.

From equations (1) and (2) it may be seen that the intensity of optical output signal is a function of the rotation rate ($\Omega$). Thus, an indication of such rotation rate may be obtained by measuring the intensity of the optical output signal, utilizing the detector 30.

Figure 6 shows a curve 80, which illustrates this relationship between the intensity of the optical output signal ($I_T$) and the Sagnac phase difference ($\phi_{ws}$) between the counter-propagating waves W1, W2. The curve 80 has the shape of a cosine curve, and the intensity of the optical output signal is at a maximum when the Sagnac phase difference ($\phi_{ws}$) is zero.

If it is assumed that the only source of phase difference between the counter-propagating waves W1, W2 is the rotation of the loop 14, the curve 80 will vary symmetrically about the vertical axis. However, in practice, a phase difference between the counter-propagating waves W1, W2 may be caused not only by rotation of the loop 14, but also by the residual birefringence of the optical fiber 12. Birefringence-induced phase differences occur because fiber birefringence tends to cause each of the two polarization modes of the single mode fiber 12 to propagate light at a different velocity. This creates a non-reciprocal, non-rotationally induced phase difference between the waves W1, W2, which causes the waves W1, W2 to interfere in a manner that distorts or shifts the curve 80 of Figure 6, for example, as illustrated by the curve 82, shown in phantom lines. Such birefringence-induced, non-reciprocal phase difference is indistinguishable from a rotationally-induced Sagnac phase difference, and in dependent on environmental factors which vary fiber birefringence, such as temperature and pressure. Thus, fiber birefringence is the cause of a major source of error in fiber optic rotation sensors.

Operation with the polarizer 32

The problem of non-reciprocal operation due to fiber birefringence is solved in the rotation sensor of the present invention by means of the polarizer 32 (Figure 1) which, as discussed above, permits utilization of only a single polarization mode. Thus, when the polarizer 32 is introduced into the system, at the point designated by the reference numeral 84 in Figure 5, light input through the polarizer 32 propagates into the loop 14 in the desired polarization mode. Further, when the counterpropagating waves are recombined to form the optical output signal, any light that is not of the same polarization as the light applied to the loop is prevented from reaching the photo detector 30, since the optical output signal as it travels from port A of coupler 34 to port B of coupler 26, also passes through the polarizer 32. Thus, the optical output signal, when it reaches the detector 30, will have precisely the same polarization as the light applied to the loop. Therefore, by passing the input light and optical output signal through the same polarizer 32, only a single optical path is utilized, thereby eliminating the problem of birefringence-induced phase difference. Further, it should be noted that the polarization controllers 24, 36 (Figure 1) may be used to adjust the polarization of the applied light, and optical output signal, respectively, to reduce optical power loss at the polarizer 32, and thus, maximize the signal intensity at the detector 30.

Operation with the phase modulator 38

Referring again to Figure 6, it will be seen that, because the curve 80 is a cosine function, the intensity of the optical output signal is nonlinear for small phase differences $(\phi_{ws})$ between the waves W1, W2. Further, the optical output signal intensity is relatively insensitive to changes in phase difference, for small values of $\phi_{ws}$. Such nonlinearity and insensitivity makes it difficult to transform the optical intensity $(I_T)$ measured by detector 30 into a signal indicative of the rate of rotation $\Omega$ (equation 1) of the loop 14.

Further, although birefringence induced phase differences between the waves W1, W2 are eliminated, as discussed above, by use of the polarizer 32, cross coupling between polarization modes caused by fiber birefringence reduces the optical intensity of the optical output signal, since such cross coupled light is prevented from reaching the photodetector 30 by the polarizer 32. Thus, changes in fiber birefringence cause the amplitude of the curve 80 of Figure 6 to vary, for example, as illustrated by the curve 84. It will be understood that curves 80, 82, 84, of Figure 6 are not drawn to scale.

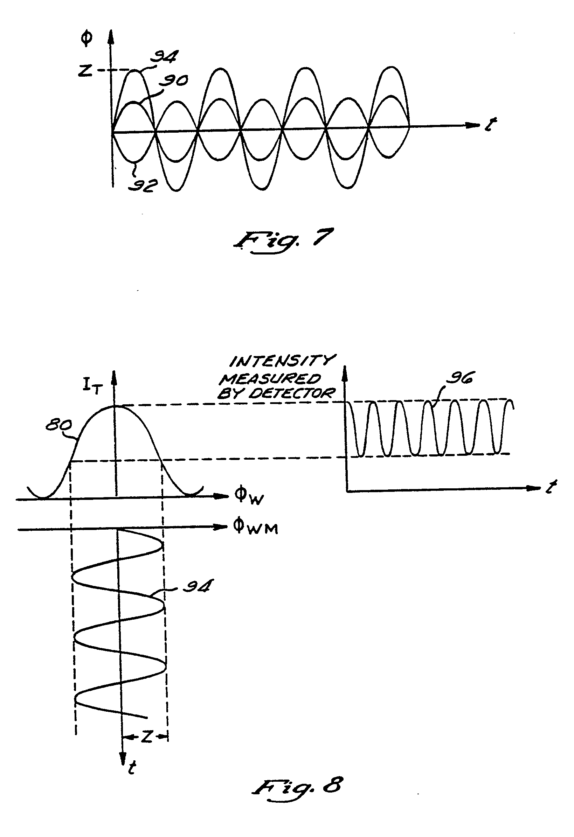

The foregoing problems are solved in the rotation sensor of the present invention by means of a synchronous detection system utilizing the phase modulator 38, signal generator 40 and lock-in amplifier 46, shown in Figure 1. Referring to Figure 7, the phase modulator 38 modulates the phase of each of the propagating waves W1, W2 at the frequency of the signal generator 40. However, as may be seen from Figure 1, the phase modulator 38 is located at one end of the loop 14. Thus, the modulation of the wave W1 is not necessarily in phase with the modulation of the wave W2. Indeed, it is necessary for proper operation of this synchronous detection system that the modulation of the waves W1, W2 be out of phase. Referring to Figure 7, it is preferable that the modulation of the wave W1, represented by the sinusoidal curve 90, be 180 degrees out of phase with the modulation of the wave W2, represented by the curve 92. Use of a modulation frequency which provides such 180 degree phase difference between the modulation of the wave W1 relative to that of W2 is particularly advantageous in that it eliminates modulator induced amplitude modulation in the optical output signal measured by the detector 30. This modulation frequency $(f_m)$ may be calculated using the following equation:

$$f_m = \frac{c}{2n_{eq}L} \tag{3}$$

where L is the differential fiber length, between the coupler 34 and modulator 38, for the counter propagating waves W1, W2 (i.e., the distance, measured along the fiber, between the modulator 38 and a symmetrical point on the other side of the loop 14); $n_{eq}$ is the equivalent refractive index for the single mode fiber 12, and c is the free space velocity of the light applied to the loop 14.

At this modulation-frequency $(f_m)$, the phase difference $(\phi_{wm})$ between the counter propagating waves W1, W2, due to phase modulation of these waves in accordance with the curves 90 and 92, is illustrated by the sinusoidal curve 94 in Figure 7. This modulation of the phase difference between the waves W1, W2 will modulate the intensity $(I_T)$ of the optical output signal in accordance with the curve 80 of Figure 6, since such phase modulation $\phi_{wm}$ is indistinguishable from rotationally induced Sagnac phase differences $\phi_{ws}$.

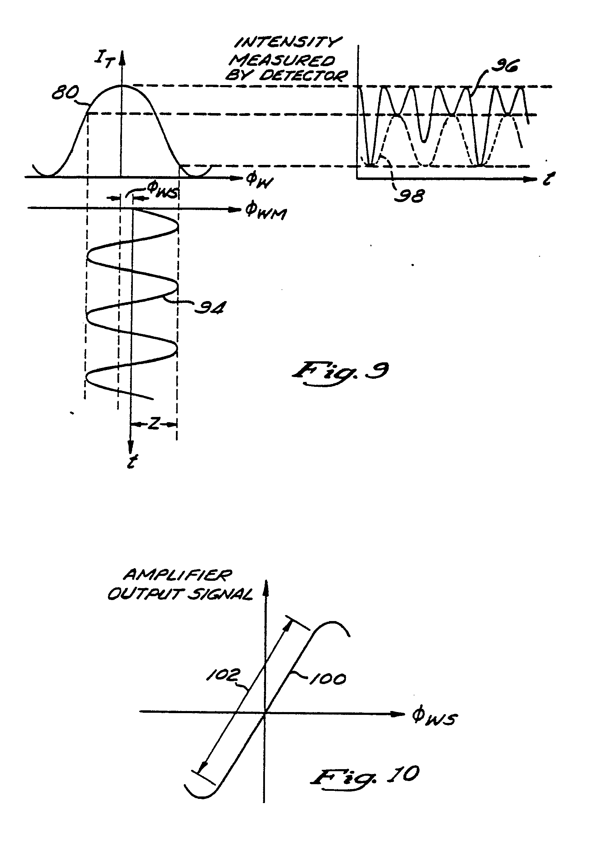

The foregoing may be understood more fully through reference to Figures 8 and 9 which graphically illustrate the effect of (a) the phase modulation $\phi_{wm}$, defined by the curve 94 of Figure 7, and (b) the Sagnac phase difference $\phi_{ws}$, upon the intensity $(I_T)$ of the optical output signal, represented by the curve 80 of Figure 6. However, before proceeding with a discussion of Figures 7 and 8, it should first be understood

that the intensity ($I_T$) of the modulated optical output signal is a function of the total phase difference between the waves W1, W2. Further, such total phase difference is comprised of both the rotationally induced Sagnac phase difference $\phi_{ws}$ and the time varying modulation induced phase difference $\phi_{wm}$. Thus, the total phase difference $\phi_w$ between the waves W1, W2 may be expressed as follows:

$$\phi_w = \phi_{ws} + \phi_{wm} \tag{4}$$

Accordingly, since the effects of the modulation induced phase difference $\phi_{wm}$, as well as the rotationally induced phase difference $\phi_{ws}$, will be considered in reference to Figures 8 and 9, the horizontal axis for the curve 80 has been relabeled as $\phi_w$ to indicate that the total phase difference is being considered, rather than only the rotationally induced phase difference, as in Figure 6.

Referring now to Figure 8, the effect of the phase modulation $\phi_{wm}$ (curve 94) upon the intensity $I_T$ of the optical output signal (curve 80) will be discussed. In Figure 8, it is assumed that the loop 14 is at rest, and thus, the optical signal is not affected by the Sagnac effect. Specifically, it may be seen that the modulation induced phase difference curve 94 varies the optical output signal in accordance with the curve 80, symmetrically about its vertical axis, so that the optical intensity measured by the detector 30 varies periodically at a frequency equal to the second harmonic of the modulating frequency, as shown by the curve 96. Since, as discussed above, the lock-in amplifier 46 is enabled by the signal generator 40 (Figure 1) to synchronously detect the detector output signal at the modulation frequency (i.e., first harmonic) of the modulator 38, and since the detector output signal is at the second harmonic of the modulation frequency as shown by the curve 96, the amplifier output signal will be zero and the display 47 will indicate a rotation rate of zero. It should be noted that, even if birefringence induced amplitude fluctuations occur in the optical output signal, as discussed in reference to the curve 84 of Figure 6, the curve 96 of Figure 8 will remain at a second harmonic frequency. Thus, such birefringence induced amplitude fluctuations will not affect the amplifier 46 output signal. The detection system of the present invention therefore, provides a substantially stable operating point that is insensitive to changes in birefringence, particularly when the loop 14 is at rest.

When the loop 14 is rotated, the counter propagating waves W1, W2 are shifted in phase, as discussed above, in accordance with the Sagnac effect. The Sagnac phase shift provides a phase difference $\phi_{ws}$ which adds to the phase difference $\phi_{wm}$ created by the modulator 38, so that the entire curve 94 is translated in phase from the position shown in Figure 8, by an amount equal to $\phi_{ws}$, to the position shown in Figure 9. This causes the optical output signal to vary non-symmetrically in accordance with the curve 80, thereby harmonically distorting this signal as shown by the curve 96 of Figure 9, so that it includes a component at the fundamental (i.e., first harmonic) frequency of the modulator 38, as illustrated in phantom lines by the sinusoidal curve 98. It will be seen subsequently that the RMS value of this sinusoidal curve 98 is proportional to the sine of the rotationally induced, Sagnac phase difference $\phi_{ws}$. Since the amplifier 46 synchronously detects signals having the fundamental frequency of the modulator 38, the amplifier 46 will output a signal to the display 47 that is proportional to the RMS value of the curve 98 to indicate the rotation rate of the loop.

The drawings of Figure 9 illustrate the intensity wave form of the optical output signal for one direction of rotation (e.g., clockwise) of the loop 14. However, it will be understood that, if the loop 14 is rotated in the opposite direction (e.g., counter-clockwise) at an equal velocity, the intensity wave form 96 of the optical output signal will be exactly the same as illustrated in Figure 9, except that it will be translated so that the curve 98 is shifted 180 degrees from the position shown in Figure 9. The lock-in amplifier 46 detects this 180 degree phase difference for the curve 98, by comparing its phase with the phase of the reference signal from the signal generator 40, to determine whether the rotation of the loop is clockwise or counter-clockwise. Depending on the direction of rotation, the amplifier 46 outputs either a positive or negative signal to the display 47. However, regardless of the direction of rotation, the magnitude of the signal is the same for equal rates of rotation of the loop 14.

The wave form of the amplifier output signal is shown in Figure 10 as the curve 100. It will be seen that this curve 100 is sinusoidal and varies positively or negatively from zero rotation rate depending on whether the rotation of the loop 14 is clockwise or counter clockwise. Further, the curve 100 has a substantially linear portion 102 which varies symmetrically about the origin and provides a relatively wide operating range for measuring rotation. Moreover, the slope of the curve 100 provides excellent sensitivity throughout its linear operating range 102.

Thus, by utilizing the synchronous detection system, the above described problems of non-linearity, insensitivity, and birefringence induced amplitude fluctuations are reduced or eliminated.

A further advantage of this detection system relates to the fact that state of the art phase modulators, such as the modulator 38, induce amplitude modulation in the optical output signal, either directly, or indirectly through polarization modulation. However, it will be recalled from the discussion in reference to equation 3 that, by operating at a specific frequency at which the phase difference between the modulation of the waves W1 and W2 is 180 degrees, the odd harmonic frequency components of the amplitude modulation, that are induced in each of the counter propagating waves, W1, W2 by the modulator 38, cancel each other when the waves are superposed to form the optical output signal. Thus, since the above described detection system detects only an odd harmonic (i.e., the fundamental frequency) of the optical output signal, the effects of amplitude modulation are eliminated. Therefore, by operating at the specific frequency defined by equation 3, and detecting only an odd harmonic of the optical output signal, the rotation sensor of the present invention may operate independently of modulator induced amplitude and polarization modulation.

A further benefit of operating at the specific frequency is that even harmonics of the phase modulation, induced by the modulator 38 in each of the counter propagating phase W1, W2, cancel when these waves are superposed to form the optical output signal. Since these even harmonics may produce spurious odd harmonics in the optical output signal which might otherwise be detcted by the detection system, their elimination improves the accuracy of rotation sensing.

In addition to operating the phase modulator 38 at the frequency defined by equation 3, it is also preferable to adjust the magnitude of the phase modulation so that the amplitude of the detected first harmonic of the optical output signal intensity is maximized, since this provides improved rotation sensing sensitivity and accuracy. It has been found that the first harmonic of the optical output signal intensity is at the maximum, for a given rotation rate, when the amplitude of the modulator induced phase difference between the waves W1, W2, indicated by the dimension labeled z in Figure 7, 8 and 9, is 1.84 radians. This may be understood more fully through reference to the following equation for the total intensity ($I_T$) of two superposed waves having individual intensities of $I_1$ and $I_2$, respectively, with a phase difference $\phi_w$ therebetween.

$$I_T = I_1 + I_2 + 2\sqrt{I_1 I_2}\ \cos\phi_w \qquad (5)$$

where:

$$\phi_w = \phi_{ws} + \phi_{wm} \qquad (6)$$

and

$$\phi_{wm} = z\sin(2\pi f_m t) \qquad (7)$$

Thus,

$$\phi_w = \phi_{ws} + z\sin(2\pi f_m t) \qquad (8)$$

the Fourier expansion of cosine $\phi_w$ is:

$$\cos\ \phi_w = \cos\phi_{ws}\left\{ J_0(z) + 2 \sum_{n=1}^{\infty} J_{2n}(z)\cos[2\pi(2nf_m t)] \right\}$$

$$-\sin\phi_{ws}\left\{ 2 \sum_{n=1}^{\infty} J_{2n-1}(z)\sin[2\pi(2n-1)f_m t] \right\} \qquad (9)$$

where $J_n(z)$ is the $n^{th}$ Bessel function of the variable z, and z is the peak amplitude of the modulator induced phase difference between the waves W1, W2.

Therefore, detecting only the first harmonic of $I_T$ yields:

$$I_{T(1)} = 4\sqrt{I_1 I_2} J_1(z)\sin\phi_{ws}\sin(2\pi f_m t) \qquad (10)$$

Thus, the amplitude of the first harmonic of the optical output signal intensity is dependent upon the value of the first Bessel function $J_1(z)$. Since $J_1(z)$ is a maximum when z equals 1.84 radians, the amplitude of the phase modulation should preferably be selected so that the magnitude of the modulator induced phase difference (z) between the waves W1, W2 is 1.84 radians.

Reducing the effects of backscatter

As is well known, present state of the art optical fibers are not optically perfect, but have imperfections which cause scattering of small amounts of light. This phenomena is commonly referred to as Rayleigh scattering. Although such scattering causes some light to be lost from the fiber, the amount of such loss is relatively small, and therefore, is not a major concern. The principle problem associated with Rayleigh scattering relates not to scattered light which is lost, but rather, to light which is reflected so that it propagates through the fiber in a direction opposite to its original direction of propagation. This is commonly referred to as "backscattered" light. Since such backscattered light is coherent with the light comprising the counterpropagating waves W1, W2, it can constructively or destructively interfere with such propagating waves, and thereby cause "noise" in the system, i.e. cause spurious variations in the intensity of the optical output signal, as measured by the detector 30.

11

The portion of backscattered light from one wave which will be coherent with the counterpropagating wave is that which is scattered within a coherence length of the center of the loop 14. Thus, by reducing the coherence length of the source, the coherence between the backscattered light and the counterpropagating waves is reduced. The remaining portion of the backscattered light will be incoherent with the counterpropagating wave, and thus, the interference therebetween will vary randomly so that it is averaged. Therefore, this incoherent portion of the backscattered light will be of substantially constant intensity, and consequently, it will not cause significant variations in the intensity of the optical output signal. Accordingly, in the present invention, the effects of backscattered light are reduced by utilizing, as the light source 10, a laser having a relatively short coherence length, for example, one meter or less. By way of specific example, the light source 10 may comprise the model GO-DIP laser diode, commercially available from General Optronics Corp., as mentioned above.

An alterantive method of prohibiting destructive or constructive interference between the backscattered waves and the propagating waves involves the inclusion of an additional phase modulator (not shown) in the system at the center of the fiber loop 14. This phase modulator is not synchronized with the modulator 38.

The propagating waves will pass through this additional phase modulator one time only, on their travel around the loop. For backscatter which occurs from a propagating wave before the wave reaches the additional modulator, the backscatter will not be phase modulated by this additional modulator, since neither its source propagating wave nor the backscatter itself has passed through the additional modulator.

On the other hand, for backscatter which occurs from a propagating wave after the wave passes through this additional phase modulator, the backscatter will be effectively twice phase modulated, once when the propagating wave passed through the additional phase modulator, and once when the backscatter passed through the additional modulator.

Thus, if the additional phase modulator introduces a phase shift of $\phi(t)$, the backscattered wave originating at any point except at the center of the loop 14 will have a phase shift of either zero, or $2\phi(t)$, either of which is time varying with respect to the $\phi(t)$ phase shift for the propagating wave. This time varying interference will average out over time, effectively eliminating the effects of the backscattered light.

In yet another alternative method of prohibiting destructive or constructive interference from backscattered light, the additional phase modulator, not synchronized with the modulator 38, may be introduced at the output of the light source 10.

In this case, backscatter occurring at any point other than the center of the loop 14 will have a different optical path length from the light source 10 to the detector 30 than does the propagating wave from which the backscattered light originated.

Thus, the propagating wave will traverse the loop 14 one time, while the backscattered wave, and the propagating wave from which it originated, will have traversed a portion of the loop 14 twice. If this portion is not one half of the loop, the path lengths differ.

Because the path lengths differ, a propagating wave which reaches the detector 30 must have been generated at the source 10 at a different time than a backscattered wave which reaches the detector 30 simultaneously.

The phase shift introduced by the additional phase modulator at the source 10 introduces a phase shift $\phi(t)$ to the propagating wave, but a phase shift of $\phi(t+k)$ to the backscattered wave, where K is the time difference between the passage of the waves through the loop 14. Since $\phi(t+k)$ is time varying with respect to $\phi(t)$, the backscattered interference will average out over time, effectively eliminating the effects of the backscatter.

## Reducing the effects of ambient magnetic fields

It has been found that ambient magnetic fields, such as the earth's magnetic field, can limit the rotation sensing accuracy of the present invention by inducing a phase difference between the counter-propagating waves W1, W2. Such magnetic fields induce this phase difference by causing the respective phases of each of the two counter-propagating waves W1, W2 to be shifted in opposite directions relative to each other, causing one to lead and one to lag.

These phase shifts of the waves W1, W2 are due to those components of the ambient magnetic field having "B fields" parallel to the direction of propagation of waves W1, W2. The magnetic field components produce a phenomenon, commonly known as the Faraday effect, which causes the direction of polarization for each wave to be rotated. This will be referred to herein as "Faraday rotation". Assuming the polarization of the light wave is expressed as the resultant sum of two circularly polarized, counter rotating components, propagating in respective polarization modes, the magnetic field may be considered to induce such Faraday rotation by retarding the propogation velocity of light in one of the polarization modes, while advancing the other by the same amount.

The polarization of a light wave may be characterized by its degree of ellipticity. If the degree of ellipticity is zero, the polarization is commonly referred to as "linear". In this state, there will be equal amounts of light in each of the modes. Similarly, if the degree of ellipticity is one, the polarization may be referred to as "circular", and all of the light will be in one of the modes. Further, if the degree of ellipticity is between zero and one, the polarization may be referred to as "elliptical" and the modes will have unequal amounts of light.

EP 0 075 013 B1

When the polarization of a wave is linear, the differential change on propagation velocity of the polarization modes, resulting from the Faraday effect, has no effect on the phase of the wave. However, when the polarization of a wave is something other than linear (i.e., ellipitical or circular), the differential change in propagation velocity causes the phase of the wave to be shifted, the amount of such phase shift being dependent upon the degree of ellipticity of the polarization. This occurs because, when the polarization is circular or elliptical, there are, as mentioned above, unequal amounts of light in each of the two polarization modes, and thus, if the propagation velocity of one of the modes is advanced, while the other is retarded, the net effect will be to increase or decrease the propagation velocity of the wave, thereby causing the phase of the wave to be shifted. Assuming, for example, that the Faraday effect increases the propagation velocity for a first mode and decreases it for a second mode, and further assuming that the light in the first mode has an amplitude larger than that of the second mode, the Faraday effect will result in a leading phase shift. On the other hand, if it is assumed that the light in the second mode has a greater amplitude than the first mode, the Faraday effect will result in a lagging phase.

As indicated above, the phase shifts resulting from the Faraday effect may be eliminated by maintaining linear polarization for the waves W1, W2 as they counter-propagate through the loop 14. Unfortunately, however, this is difficult to accomplish, since presently available optical fibers have residual linear birefrigence, which causes the waves W1, W2 to change their respective states of polarization as they propagate through the fiber. For example, if the waves W1, W2 are linearly polarized wave when introduced into the loop 14, such residual linear birefrigence will cause their polarization to change, e.g., to elliptical, as the waves traverse the loop 14. Thus, each wave W1, W2 will exhibit a phase shift, due to the Faraday effect, upon exiting the loop 14. Further, in the embodiment of Figure 1, these phase shifts are in opposite directions, and thus, they produce a phase difference between the waves W1, W2.

The foregoing may be understood more fully through reference to an example. Accordingly, there is shown in Figure 11 the loop portion of the rotation sensor of Figure 1 which, in order to simplify the present discussion, is illustrated as being a single turn loop, rather than a multi-turn loop. Further, the residual linear birefrigence of the fiber is assumed to be concentrated at the center of the loop 14, at the point designated by the reference numeral 117. Additionally, the earth's magnetic field (B field) is assumed to be in the plane of the loop, in the direction illustrated by the arrows 118, so that this B field is generally parallel to the fiber at the top and bottom of the loop, as viewed in Figure 11. It will be recalled from the discussion in reference to Figure 1 that the waves W1, W2 are linearly polarized when they enter the loop 14, and that the polarization controller 36 is adjusted to compensate for the fiber birefringence so that the polarization of the waves W1, W2 is also linear when they exit the loop 14. Furthermore, to the extent that the fiber birefringence is symmetrically distributed about the loop 14, as is the case in Figure 11, the polarization of the waves W1, W2, with the controller 36 so adjusted, will be the same at any given point on the loop 14. In the present example, the birefrigence at the center of the loop 117 will be assumed to change the phase of each wave by one-quarter wavelength, so that linearly polarized light will be transformed into circularly polarized light, and vice versa. Thus, the controller 36 is adjusted to compensate for this phase change by shifting the phase an equal amount, i.e., one-quarter wavelength.

When the linearly polarized wave W1 begins its traverse of the loop 14, the birefringence of the controller 36 will change its state of polarization to e.g., right-hand circular. As this wave, W1 propagates through the top portion of the loop 14, its phase will be shifted, in accordance with the Faraday effect, due to the presence of the field 118. Upon reaching the residual birefringence at the center 117 of the loop 14, the circular polarization of the wave W1 will be transformed to a linear polarization. Since the polarization of the wave W1 remains linear through the bottom portion of the loop 14, the field 118 will have no further effect on the wave W1. Similarly, the wave W2, which initially traverses the lower portion of the loop, is not affected by the field 118 at this lower portion, since its polarization will remain linear until it reaches the birefrigence at the point 117. At the point 117, the polarization of the wave W2 is transformed to e.g., right-hand circular, and thus, as the wave W2 traverses the upper portion of the loop, its phase will be shifted, in accordance with the Faraday effect, due to the presence of the field 118. However, since the waves W1, W2 propagate in opposite directions with the same polarization through the upper portion of the loop 14, but the field 118 remains in the same direction, the respective phase shifts of the waves W2, W2 induced by the field 118 will be in opposite directions. Thus, there will be a phase difference between the waves W1, W2 when they reach the coupler 34, due to the Faraday effect. It may be seen, therefore, that ambient magnetic fields are a source of non-reciprocal behavior in fiber optic rotation sensors.

In order to eliminate rotation sensing errors produced by ambient magnetic fields through the Faraday effect, the present invention includes a housing 110, shown in Figure 12, for shielding or isolating the rotation sensor, particularly the loop 14 and coupler 34, from such ambient fields. In the embodiment shown, the housing 110 comprises a cylindrical tube of μ-metal which has a sufficiently high magnetic permeability to effectively shield the rotation sensor from the magnetic environment. The dimensions of the housing 110 may be chosen to accommodate the structural dimensions of the rotation sensor and the hostility of the magnetic environment. By way of specific example, the μ-metal shield may be 17.78 centimeters (7 inches) in diameter, 45.72 centimeters (18 inches) long and 0.158 centimeter (1/16th inch) thick. In any case, the dimensions and materials utilized should perferably reduce the magnetic field impinging upon the fiber by an amount commensurate with the sensing accuracy of the rotation sensor. That is, the reduction in the magnetic field intensity should be sufficient so that rotation sensing accuracy is not limited by the Faraday effect produced by such field. Assuming that the magnetic environment is due solely to the earth's magnetic field (i.e., about $5 \cdot 10^{-5}$ Tesla or 0.5 gauss), the above-described embodiment of the shield will reduce the magnetic field by a factor of about 100 to about $5 \cdot 10^{-7}$ Tesla (0.005 gauss) which is needed to achieve a long term stability of about 0.1 degrees/hour.

The fiber optic components of the rotation sensor, including the loop 14, may be mounted on a base plate 112, mounted within the housing 110. The ends of the housing may be closed by means of a μ-metal caps 114, one of which has a suitable opening 116 for passage of the amplifier line 48 and modulator line 39 (Figure 1).

It will be recalled from the discussion in reference to Figure 1 that a portion of the input light from the source 10 is coupled, by the coupler 26, to the fiber 28, where it is lost at the non-reflective termination labeled "NC." Further, when the waves W1, W2 return from the loop 14, and are combined to form an optical output signal, a portion of this signal is lost, through port C of the coupler 34. The remaining portion of the output signal propagates back toward the source 10, where a portion of the optical output signal is coupled, by the coupler 26, from the fiber 12 to the fiber 28 for propagation to the photodetector 30. The remaining uncoupled portion of the optical output signal, which propagates through the fiber 12 to the laser source 10, is lost. Assuming the couplers 26 and 34 have a coupling efficiency of 50%, the system losses resulting from the couplers 26, 34 are 87.5%. The coupler 26 alone accounts for 67.5% of this loss in optical power.

In order to reduce these system losses, the present invention includes a fiber optic isolator 120, positioned between the source 10 and polarization controller 24, as shown in Figure 13. This isolator 120 comprises a polarizer 122 and a magneto-optic, or Faraday, rotator 124. In this embodiment, the need for the coupler 26 (Figure 1) is eliminated by positioning the detector 30 to measure the intensity of the light rejected by the polarizer 122. This light may be focused upon the photodetector 30 by means of a lens 126.

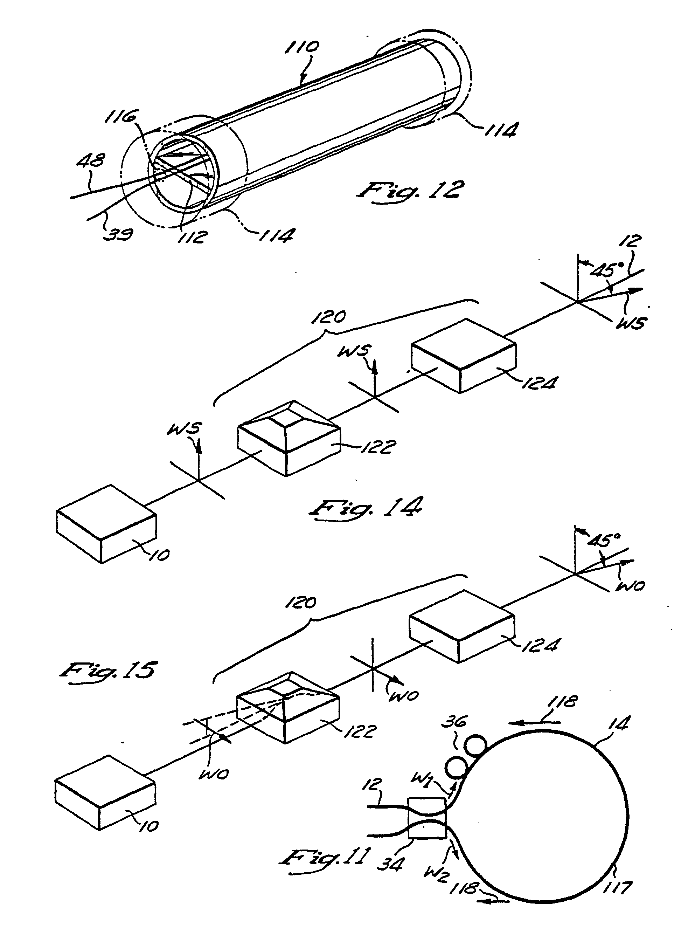

The operation of the fiber optic isolator may be more fully understood through reference to Figures 14 and 15. Referring first to Figure 14, the polarization of the light passed by the polarizer 122 is matched to that produced by the light source 10, so that all of the source light introduced into the fiber 12 passes through the polarizer 122 to the magneto-optic rotator 124. It will be understood, however, that this polarization match may be accomplished by means of a polarization controller of the type discussed above in reference to the controllers 24, 36. For the purposes of this discussion, it will be assumed that the light produced by the source 10 is linearly polarized in a vertical direction, and that the polarizer 122 passes this polarization, while rejecting other polarizations. This linearly polarized light is represented in Figure 14 by the arrows labeled WS.

As seen from Figure 14, the source light WS produced by the source 10 is unchanged in polarization as it propagates through the polarizer 122. However, when the light passes through the rotator 124, its direction of polarization is rotated by 45 degrees. Referring back to Figure 13, the light WS then propagates through the polarization controller 24, where its polarization is adjusted for efficient passage through the polarizer 32, as discussed previously. For example, if the polarizer 32 is designed to pass light having a linear, vertical polarization, the controller 24 should be adjusted to rotate the direction of polarization by 45 degrees, in a direction opposite that produced by the rotator 124, so that the light is again vertically polarized. The light is then split into the counter-propagating waves W1, W2 by the coupler 34, for propagation about the loop 14. After traversing the loop 14, the waves W1, W2 are recombined, by the coupler 34, to form the optical output signal, which propagates back through the polarizer 32. It will be recalled that the polarization controller 36 may be utilized to adjust the polarization of the counter-propagating waves so that the optical output signal passes efficiently through the polarizer 32, e.g., with a linear, vertical polarization. The polarization controller 24, being a reciprocal device, then rotates the direction of polarization of the optical output signal by 45 degrees so that it now has the same polarization upon exiting the controller 24 as the source light did when it entered the controller 24. Accordingly, as shown in Figure 15, the optical output signal, labeled WO, is shown as entering the isolator 120 with a polarization that is identical, from the point of view of an observer, to the polarization of the source light WS (Figure 14) exiting the isolator 120. When the optical output signal WO passes through the rotator 124, the direction of polarization is rotated by another 45 degrees. It is a unique feature of the rotator 124 that the direction of rotation is the same regardless of the direction of propagation of the light. Thus, the first 45-degree rotation of the source light and the second 45-degree rotation of the optical output signal will add so that the optical output signal WO has a horizontal direction of polarization when it leaves the rotator 124. Since the polarizer 122 rejects polarizations which are orthogonal to those that it passes, the optical output signal WO will be prevented from propagating through the polarizer 122 to the light source 10. The polarizer 122 couples light from the fiber 12, so that the signal WO will be emitted from the polarizer 122 in a directional, diverging beam. Preferably, the polarizer 122 is of the same type as discussed above in reference to the polarizer 32. It is significant that the light rejected by this type of polarizer is emitted therefrom in a directional ray, having a relatively low divergence angle (e.g., 20°), and thus, the photo-sensitive surface of the detector 30 does not need to be especially large or uniquely shaped. In the embodiment shown, this photo-sensitive surface is about 1 mm in diameter.

The light may be impressed upon the detector 30 by focusing it thereon, utilizing the lens 126, as discussed above. Alternatively, an optical fiber (not shown) having a core diameter of, e.g., 500 microns, may be utilized to guide the light to the detector 30, by positioning one end of the fiber immediately

14

adjacent to the polarizer so that the light rejected by the polarizer is introduced into the fiber, and by positioning the other end of the fiber so that light form the fiber is impressed upon the detector 30. It should be noted that, even if all of the light rejected by the polarizer 122 is not impressed upon the photosensitive surface of the detector 30, e.g., due to slight misalignment of the focussing lens or guiding fiber, this is more than compensated by the increase in the intensity of the optical output signal resulting from elimination of the coupler 26 (Figure 1).

Further, it is also significant that, when light is rejected by the polarizer, the orientation of the above described directional ray, emitted from the polarizer 122, will be different for one direction of propagation than for the other. That is, for propagation in one direction, light is emitted on one side of the polarizer 122, while, for propagation in the other direction, the light is emitted on the opposite side of the polarizer. Therefore, even if the source light polarization is not precisely the same as that passed by the polarizer, any source light rejected by the polarizer will not be directed towards the detector, and thus, will not interfere with measurement of the optical output signal intensity.

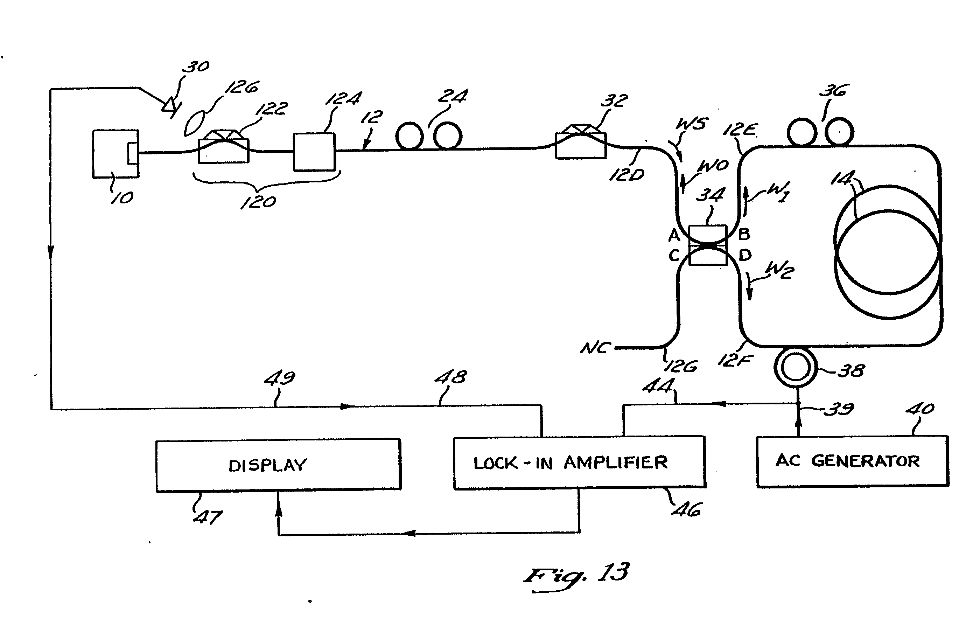

As shown in Figure 16, the magneto-optic rotator comprises a fiber 132 wrapped upon a mandrel 170 to provide a series of fiber loops having curved portions and straight portions. The mandrel 170 is made from a nonferrous material, such as aluminum, and comprises a central bar portion 172, square in cross-section. A pair of cylindrical portions 174, 176 are formed at the respective ends of the central portion 172, and perpendicular thereto. The cylindrical portions 174, 176 are oriented so that they are mutually perpendicular. As viewed in Figure 16, the cylindrical portion 174 has a right end 175 (a) and left end 175 (b), projecting from respective parallel sides of the central portion 172. Similarly, the cylindrical portion 176 has an upper end 177 (a) and lower end 177 (b), projecting from respective parallel sides of the central portion 172. Further, the cylindrical portions 174, 176 have diameters which are equal to or larger than the sides of the central portions 172.

The fiber 132 is first wrapped around the upper end 177a of the cylindrical portion 176 to form a curved fiber portion 178 joining two straight portions 180, 182. Next, the fiber is wrapped around the left end 175b of the horizontal cylindrical portion 174 to form a curved portion 183 joining the straight portion 182 with a straight portion 184. The wrapping continues by forming another curved portion 186 around the lower end 177b of the vertical cylindrical portion 176 to join the straight portion 184 to a straight portion 188. Finally, another curved portion 190 is formed, by wrapping the fiber 132 around the right end 175b of the horizontal portion 174 to join the straight portion 188 with a straight portion 192. It will be understood that the wrapping is accomplished so that the straight portions 180, 182, 184, 188 and 192 are parallel to each other. Further, by wrapping the fiber in the foregoing manner, the curved portions 178, 186 will lie in a horizontal plane, while the curved portions 183, 190 lie in a vertical plane.

Although, for clarity of illustration, only four turns (curved portions) are provided in the fiber 132 of Figure 16, it will be understood that the fiber 132 may be wrapped in the same manner to provide additional turns. In addition, it will be understood from the following description that, although the curved portions are shown to comprise 1/2 turn, they may comprise N+1/2 turns (n being an integer) and still permit the straight portions to be positioned as shown in Figure 16.

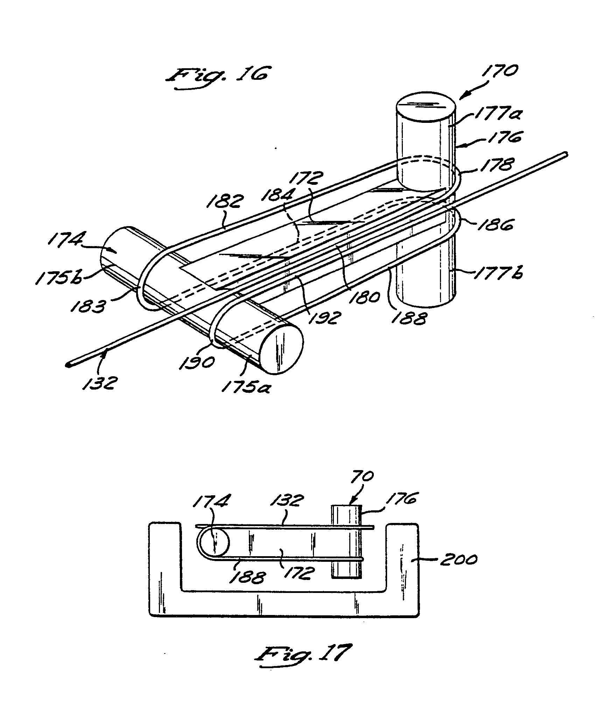

A magnetic field is applied to the fiber 132 by positioning the mandrel 170 between the poles of a magnet 200, as shown in Figure 17, so that the B field of this magnet is parallel to the straight portions of the fiber 132. The magnet 200 may be of any suitable type or shape. For example, it may be either an electro-magnet or permanent magnet. Further, the magnet may be e.g., shaped as a toroid, or as a horseshoe.

As light propagates through these straight portions 180, 182, 184, 188 and 192, its direction of polarization is rotated by the magnetic field, in accordance with the Faraday effect. With the fiber 132 wrapped in the manner shown in Figure 16, light propagating through the fiber 132 reverses its direction of propagation as it travels from one straight portion to another straight portion. Thus, it will propagate in the same direction as the B field, e.g., through the straight portions 180, 184 and 192, but will propagate in the opposite direction from the B field through, e.g., the straight portions 182 and 188. The magnetic field, therefore, will rotate the polarization, in accordacne with the Faraday effect, so that, from the viewpoint of a fixed (i.e., stationary) observer, the Faraday rotations in any two adjacent straight portions 180, 182, 184, 188, 192 will appear to be in the same direction. However, even though these rotations are in the same direction, they do not ordinarily add to each other since, due to propagation around the curved portions 178, 183, 186, 190, the direction of polarization (as viewed by a stationary observer) in one straight portion is reversed so that it is the mirror image of the light in an adjacent straight portion, and thus, the rotations due to the Faraday effect in any two adjacent straight portions would cancel, yielding a net rotation of zero. The magneto-optic rotator of Figure 16 solves this problem by forming the curved portions 178, 183, 186, 190 (i.e., selecting the diameter of the cylindrical portions 174, 176 and the number of turns of the fiber 132) so that they each create a linear birefringence sufficient to provide a spatial separation between light in the polarization modes of one-half wavelength, or a phase difference of 180 degrees. This advantageously causes the direction of polarization as viewed by an observer to be the same in each of the straight portions 180, 182, 184, 188, 192, so that the Faraday rotations add to each other, rather than cancel each other. Thus, by providing a series of straight portions, a large Faraday rotation may be obtained, even though the Faraday rotation for one of the straight portions may be relatively small.

If the strength of the magnetic field (B field) applied to the fiber 132 is approximately 1,000 gauss, a fiber wrapped according to the specifications set forth below will provide a total Faraday rotation of 45 degrees for light propagating through the fiber in either direction. Thus, if a lightwave propagates through the fiber 132 in one direction, and returns therethrough in the other direction, the total Faraday rotation will be 90 degrees. This amount of Faraday rotation permits the magneto-optic rotator to be utilized as an optical isolator, in the manner discussed in reference to Figures 14 and 15.

For example, in one embodiment, which has been constructed, a total of 32 turns are utilized. The specifications for this embodiment are as follows:

| | |
|---|---|
| Number of curved portions: | 32 |
| Number of straight portions: | 33 |
| Length of one straight portion: | 12 cm |
| Diameter of mandrel cylindrical portion: | 2.5 cm |
| Number of turns for each curved portion: | 1.5 |
| Outside diameter of the fiber: | 110 microns |
| Wavelength of the light: | 0.633 microns |
| Total length of fiber: | 4 meters (approx.) |

**Claims**

1. An all-fiber optic rotation sensor, comprising a light source (10) for producing a light wave; an optical fiber wave guide (12) forming a line portion (12A) and a loop portion (14), said light source (10) being optically coupled to said line portion (12A) for propagation of said light wave through said line portion (12A) to said loop portion (14);

a first evanescent field fiber optic directional coupler (34), connected between said light source (10) and said loop portion (14), said first coupler (34) closing said loop portion (14) and coupling said loop portion (14) and said line portion (12A);

a portion of said optical fibre-wave guide (12) forming a polarization controller (36) for controlling the polarization of light propagating in the loop portion (14);

a polarizer (32) to cause light propagating through said optical fiber wave guide (12) to be polarized to a preselected polarization;

means for coupling light (26, 120) from a further line portion (12C) to provide an output signal indicative of the rotation rate of said loop portion (14), said polarizer (32) passing only the portion of said light coupled to said further line position (12C) from said loop porton (14) by said directional coupler (34), said portion of said light traveling an identical optical path through said loop portion (14) to said coupling means (26, 120), so that nonrotationally induced phase differences in said output signal are eliminated;

a phase modulator (38) for modulating the phase of light in the loop portion (14) at a specific frequency;

a detector (19), positioned to receive said output signal from said coupling means (26, 120) for detecting said output signal to determine the rotation rate of said loop portion (14);

said optic rotation sensor being characterized in that said optical fiber wave guide (12) comprises a single, continuous, uninterrupted strand of optical fiber (12A, 12B, 12C, 12D, 14), said single, continuous, uninterrupted strand of optical fiber (12) having a portion of the cladding removed from one side thereof to form a first oval surface, said polarizer (32) comprising a birefringent crystal juxtaposed against said first oval surface to cause light propagating through said strand (12) to be linearly polarized, and in that said phase modulator further introduces an amplitude modulation in light propagating through the loop portion (14), said specific frequency being selected to eliminate errors in the output signal caused by the amplitude modulation, and said optic rotation sensor further comprises a detection system for detecting only an odd harmonic of the output signal, said specific frequency causing the odd harmonic frequency components of the amplitude modulation to cancel.

2. A rotation sensor as defined in Claim 1, characterized in that said single, continuous, uninterrupted strand of optical fiber (12) has a portion of the cladding removed from one side of said fiber at the ends of said loop portion (14) to form second and third oval surfaces, said second and third oval surfaces being juxtaposed and optically closing said loop portion (14) to form said directional coupler (34).

3. A rotation sensor as defined in Claim 1 or 2, characterized in that said coupling means comprises an optical isolator (120).

4. A rotation sensor as defined in Claim 1 or 2, characterized in that said coupling means comprises a second evanescent field fiber optic directional coupler (26).

5. A rotation sensor as defined in any one of Claims 1 to 4, additionally characterized by a means for guiding said output signal from said coupling means (26, 120) to said detector (30).

6. A rotation sensor as defined in Claim 5, characterized in that said guiding means comprises a lens (126).

7. A rotation sensor as defined in Claim 5, characterized in that said guiding means comprises an optical fiber (28).

8. A rotation sensor as defined in any one of Claims 1 to 7, characterized in that the loop portion (14) is wrapped for a plurality of turns about a support, with the central turns being positioned innermost adjacent to the support and the turns toward the ends of the loop portion (14) being positioned outermost away from the support so that both end portions of the strand forming the loop (14) are positioned symmetrically about the central turns and are freely accessible at the outside of the loop portion (14).

9. A rotation sensor as defined in any one of Claims 1 to 8, characterized in that said specific frequency equals C/2nL where L is the differential length, measured along the fiber, between (a) the phase modulator (38) and one end of the loop portion (14) and (b) the phase modulator (38) and the other end of the loop portion; C is the free space velocity of light; and n is the equivalent refractive index for said optical fiber (12).

10. A rotation sensor as defined in any one of Claims 1 to 9, characterized in that said amplitude modulation is caused directly by said phase modulator (38).

11. A rotation sensor as defined in any one of Claims 1 to 9, characterized in that said amplitude modulation is caused by polarization modulation induced by said phase modulator (38).

12. A rotation sensor as defined in any one of Claims 1 to 11, characterized in that said detection system detects only the fundamental frequency of said output signal.

13. A rotation sensor as defined in any one of Claims 1 to 12, characterized in that said detection system comprises an amplifier (46) for providing a narrow band pass filter characteristic at the specific frequency.

14. A rotation sensor as defined in Claim 13, characterized in that said detection system comprises a lock-in amplifier (46) synchronized to said phase modulator (38).

15. A rotation sensor as defined in Claim 9, characterized in that said specific frequency is selected, with reference to said length L, to provide a modulation phase difference of 180° between light waves propagating through said loop portion (14).

16. A rotation sensor as defined in any one of Claims 1 to 15, additionally characterized by a shield (110) for shielding the loop portion (14) of fiber optic material from an ambient magnetic field to reduce the effects of the magnetic field on the light propagating through the loop portion (14).

17. A rotation sensor as defined in Claim 16, characterized in that said shield (110) comprises a housing (110) for the loop portion (14), the housing (110) being made from a material having a high magnetic permeability.

18. A rotation sensor as defined in any one of Claims 1 to 17, characterized in that a portion of said loop portion (14) forms plural coils, the diameter of said coils being selected to stress said fiber to provide a birefringent medium to form said polarization controller (36) for controlling the polarization of light propagating in said loop portion (14).

19. A method of manufacturing a rotation sensor, comprising the steps of:

providing an optical fiber wave guide (12);

providing a first evanescent field fiber optic directional coupler (34);

removing a portion of the cladding from said optical fiber wave guide in at least three locations along said optical fiber wave guide (12) to provide at least three coupling regions;

juxtaposing two of said coupling regions to form a closed loop (14) in said optical fiber wave guide (12);

coupling a light source (10) to said optical fiber wave guide (12) for propagating light to said loop (14) in order to form a pair of waves which counterpropagate about said loop (14);

inserting a polarization controller (36) in the loop for controlling the polarization of the pair of waves counterpropagating about said loop (14);

providing a polarizer (32) to cause light propagating through said optical fiber wave guide (12) to be polarized to a preselected polarization;

providing a phase modulator (38) for modulating the phase of light in the loop portion (14) at a specific frequency;

positioning a detector (30) to detect the phase difference between only those portions of said counterpropagating waves which travel identical optical path lengths about said loop (14) and to provide an output signal indicative of the rotation rate of said loop (14);

characterized in that the step of providing an optical fiber wave guide (12) comprises:

providing a single, continuous, uninterrupted strand of optical fiber;

in that the step of providing a polarizer (32) comprises:

juxtaposing a birefringent crystal with a third of said coupling regions to cause light propagating through said strand to be linearly polarized;

in that the step of providing a phase modulator (38) comprises selecting a specific frequency to eliminate errors in the output signal caused by amplitude modulation introduced by said phase modulator (38); and

in that the step of providing a detector (30) comprises detecting only an odd harmonic of the output signal.

20. A method of manufacturing a rotation sensor as defined in Claim 19, characterized in that the step of inserting the polarization controller (36) comprises forming plural coils in said continuous fiber strand (12), which have diameters sufficiently small to create stress-induced birefringence to control the polarization of said counterpropagating waves.

17

# EP 0 075 013 B1

**Patentansprüche**

1. Allfaseroptik-Rotationsfühler mit einer Lichtquelle (10) zur Erzeugung einer Lichtwelle; mit einem optischen Faserwellenleiter (12), der einen Linienabschnitt (12A) und einem Schleifenabschnitt (14) bildet, wobei die Lichtquelle (10) optisch mit dem Linienabschnitt (12A) zur Fortpflanzung der Lichtwelle durch den Linienabschnitt (12A) zum Schleifenabschnitt (14) gekoppelt ist; einem ersten Dämpfungsfeld-Faseroptik-Richtkoppler (34), der zwischen der Lichtquelle (10) und dem Schleifenabschnitt (14) angeschlossen ist, wobei dieser erste Koppler (34) den Schleifenabschnitt (14) schließt und den Schleifenabschnitt (14) mit dem Linienabschnitt (12A) koppelt; wobei ein Abschnitt des optischen Faserwellenleiters (12) einen Polarisationsergler (36) zum Kontrollieren der Polarisation des sich in dem Schleifenabschnitt (14) fortpflanzenden Lichts bildet; einem Polarisator (32), um zu bewirken, daß sich durch den optischen Faserwellenleiter (12) fortpflanzendes Licht mit einer vorbestimmten Polarisation polarisiert ist; mit Einrichtungen zur Kopplung von Licht (26, 120) von einem weiteren Linienabschnitt (12C), um ein Ausgangssignal zu liefern, das die Rotationsrate des Schleifenabschnitts (14) angibt, wobei der Polarisator (32) nur denjenigen Teil des Lichts durchläßt, der auf den weiteren Linienabschnitt (12C) aus dem Schleifenabschnitt (14) durch dem Richtkoppler (34) gekoppelt wird, wobei der Abschnitt des Lichts einen identischen optischen Pfad durch den Schleifenabschnitt (14) zu der Kopplungseinrichtung (26, 120) durchläuft, so daß nicht rotationell induzierte Phasendifferenzen in dem Ausgangssignal eliminiert sind; mit einem Phasenmodulator (28) zur Modulierung der Phase des Lichts in dem Schleifenabschnitt (14) mit einer spezifischen Frequenz; ferner mit einem Detektor (19), der zur Aufnahme des Ausgangssignals aus der Kopplungseinrichtung (26, 120) positioniert ist, um dieses Ausgangssignal zur Bestimmung der Rotationsrate des Schleifenabschnitts (14) zu detektieren; wobei der optische Rotationsfühler dadurch gekennzeichnet ist, daß der optische Faserwellenleiter (12) aus einem einzigen, kontinuierlichen, ununterbrochenen Strang einer optischen Faser (12A, 12B, 12C, 12D, 14) besteht, daß der einzige, kontinuierliche, ununterbrochene Strang der optischen Faser (12) einen Abschnitt besitzt, dessen Umkleidung an einer Seite entfernt ist, um eine erste ovale Oberfläche zu bilden, daß der Polarisator (32) aus einem doppelbrechenden Kristall besteht, der an der ersten ovalen Oberfläche angeordnet ist, um zu bewirken, daß sich durch den Strang (12) fortpflanzendes Lichts linear polarisiert wird, und daß der Phasenmodulator ferner eine Amplitudenmodulation in das sich durch den Schleifenabschnitt (14) fortpflanzende Licht einführt, daß die spezifische Frequenz derart gewählt ist, daß Fehler im Ausgangssignal beseitigt werden, die durch die Amplitudenmodulation verursacht wurden, und daß der optische Rotationsfühler ferner ein Detektorsystem umfaßt, um nur eine ungerade Harmonische der Ausgangssignals zu detektieren, wobei die spezifische Frequenz bewirkt, daß sich die ungeraden harmonischen Frequenzkomponenten der Amplitudenmodulation aufheben.

2. Rotationsfühler nach Anspruch 1, dadurch gekennzeichnet, daß der einzige, kontinuierliche, ununterbrochene Strang einer optischen Faser (12) einen Abschnitt besitzt, dessen Umkleidung von einer Seite der Faser an den Enden des Schleifenabschnitts (14) entfernt wurde, um zweite und dritte ovale Oberflächen zu bilden, und daß die zweiten und dritten ovalen Oberflächen nebeneinanderliegen und optisch den Schleifenabschnitt (14) schließen um den Richtkoppler zu bilden.

3. Rotationsfühler nach Anspruch 1 oder 2, dadurch gekennzeichnet, daß die Kopplungseinrichtung einen optischen Isolator (120) umfaßt.

4. Rotationsfühler nach Anspruch 1 oder 2, dadurch gekennzeichnet, daß die Kopplungseinrichtung einen zweiten Dämpfungsfeld-Faseroptik-Richtkoppler (26) umfaßt.

5. Rotationsfühler nach einem der Ansprüche 1 bis 4, dadurch gekennzeichnet, daß eine Einrichtung zur Führung des Ausgangssignals von der Kopplungseinrichtung (26, 120) zu dem Detektor (30) vorgesehen ist.

6. Rotationsfühler nach Anspruch 5, dadurch gekennzeichnet, daß die Führungseinrichtung eines Linse (126) umfaßt.

7. Rotationsfühler nach Anspruch 5, dadurch gekennzeichnet, daß die Führungseinrichtung eine optische Faser (28) umfaßt.

8. Rotationsfühler nach einem der Ansprüche 1 bis 7, dadurch gekennzeichnet, daß der Schleifenabschnitt (14) mit einer Vielzahl von Windungen um einen Träger herumgswickelt ist, wobei die zentralen Windungen ganz innen benachbart zum Träger positioniert sind und die Windungen zu den Enden des Schleifanabschnitts (14) hin ganz außen weg von dem Träger positioniert sind, so daß die beiden Endabschnitte des die Schleife (14) formenden Strangs symmetrisch um die zentralen Windungen herum angeordnet und an der Außenseite des Schleifenabschnitts (14) frei zugänglich sind.

9. Rotationsfühler nach einem der Ansprüche 1 bis 8, dadurch gekennzeichnet, daß die spezifische Frequenz gleich $C/2nL$ ist, wobei L die differentielle Länge ist, gemessen entlang der Faser, zwischen (a) dem Phasenmodulator (38) und einem Ende des Schleifenabschnitts (14) und (b) dem Phasenmodulator (38) und dem anderen Ende des Schleifenabschnitts, während C die Lichtgeschwindigkeit im freien Raum ist und n der äquivalente Brechungsindex der optischen Faser (12).

10. Rotationsfühler nach einem der Ansprüche 1 bis 9, dadurch gekennzeichnet, daß die Amplitudenmodulation direkt durch den Phasenmodulator (38) hervorgerufen wird.

11. Rotationsfühler nach einem der Ansprüche 1 bis 9, dadurch gekennzeichnet, daß die Amplitudenmodulation durch Polarisationsmodulation bewirkt wird, die durch den Phasenmodulator (38) induziert wird.

12. Rotationsfühler nach einem der Ansprüche 1 bis 11, dadurch gekennzeichnet, daß das Detektorsystem nur die Grundfrequenz des Ausgangssignals detektiert.

13. Rotationsfühler nach einem der Ansprüche 1 bis 12, dadurch gekennzeichnet, daß das Detektorsystem einen Verstärker (46) umfaßt, um für die spezifische Frequenz eine Schmalband-Bandfiltercharakteristik zu liefern.

14. Rotationsfühler nach Anspruch 13, dadurch gekennzeichnet, daß das Detektorsystem einen Verkopplungsverstärker bzw. Verriegelungsverstärker (46) umfaßt, der mit dem Phasenmodulator (38) synchronisiert ist.

15. Rotationsfühler nach Anspruch 9, dadurch gekennzeichnet, daß die spezifische Frequenz mit Bezug auf die Länge L gewählt ist, um eine Modulationsphasendifferenz von 180° zwischen Lichtwellen hervorzurufen, die sich durch den Schleifenabschnitt (14) fortpflanzen.

16. Rotationsfühler nach einem der Ansprüche 1 bis 15, dadurch gekennzeichnet, daß eine Abschirmung (110) zur Abschirmung des Schleifenabschnitts (14) aus faseroptischem Material gegen ein Umgebungsmagnetfeld vorgesehen ist, um die Auswirkungen des Magnetfeldes auf das Licht zu vermindern, das sich durch den Schleifenabschnitt (14) fortpflanzt.

17. Rotationsfühler nach Anspruch 16, dadurch gekennzeichnet, daß die Abschirmung (110) ein Gehäuse (110) für den Schleifenabschnitt (14) umfaßt, daß das Gehäuse (110) aus einem Material mit einer hohen magnetischen Permeabilität hergestellt ist.

18. Rotationsfühler nach einem der Ansprüche 1 bis 17, dadurch gekennzeichnet, daß ein Teil des Schleifenabschnitts (14) mehrere Spulen bildet, daß der Durchmesser der Spulen derart gewählt ist, daß die Faser unter Spannung gesetzt wird, um ein doppelbrechendes Medium zur Bildung des Polarisationsreglers (36) zu schaffen, um die Polarisation des sich durch den Schleifenabschnitt (14) fortpflanzenden Lichts zu kontrollieren.

19. Verfahren zur Herstellung eines Rotationsfühlers mit den folgenden Verfahrensschritten:

Bereitstellen eines optischen Faserwellenleiters (12);

Bereitstellen eines ersten Dämpfungsfeld-Faseroptik-Richtkopplers (34);

Entfernen eines Abschnitts der Hülle von dem optischen Faserwellenleiter an wenigstens drei Stellen entlang des optischen Faserwellenleiters (12), um wenigstens drei Kopplungsbereiche zu bilden;

Nebeneinanderpositionieren der beiden Kopplungsbereiche zur Bildung einer geschlossenen Schleife (14) in dem optischen Faserwellenleiter (12);

Koplung einer Lichtquelle (10) mit dem optischen Faserwellenleiter (12) zur Fortpflanzung von Licht in die Schleife (14), um ein Paar von Wellen zu bilden, die sich gegenläufig um die Schleife (14) herum fortpflanzen;

Einfügen eines Polarisationsreglers (36) in die Schleife zur Kontrollierung der Polarisation des Paars von in der Schleife (14) gegenläufigen Wellen;

Bereitstellen eines Polarisators (32), damit sich durch den optischen Faserwellenleiter (12) fortpflanzendes Licht mit einer vorgewählten Polarisation polarisiert wird;

Bereitstellen eines Phasenmodulators (38) zur Modulierung der Phase des Lichts in dem Schleifenabschnitt (14) mit einer spezifischen Frequenz;

Positionieren eines Detektors (30) zur Detektierung der Phasendifferenz zwischen nur denjenigen Teilen der gegenläufigen Wellen, die über identische optische Pfadlängen um die Schleife (14) herumwandern, und um ein Ausgangssignal zu liefern, das die Rotationsrate der Schleife (14) angibt, dadurch gekennzeichnet, daß der Verfahrensschritt, einen optischen Faserwellenleiter (12) vorzusehen, umfaßt:

Bereitstellen eines einzigen, kontinuierlichen, ununterbrochenen Strangs einer optischen Faser;

daß ferner der Schritt der Bereitstellung eines Polarisators (32) umfaßt:

Nebeneinanderpositionieren eines doppelbrechenden Kristalls mit einem dritten der Kopplungsbereiche, um zu bewirken, daß sich durch den Strang fortpflanzendes Licht linear polarisiert wird;

daß der Verfahrensschritt, einen Phasenmodulator (38) vorzusehen, umfaßt:

Auswählen einer spezifischen Frequenz zur Beseitigung von Fehlern im Ausgangssignal, die durch Amplitudenmodulation verursacht werden, welche durch den Phasenmodulator (38) eingeführt wird; und

daß der Verfahrensschritt, einen Detektor (30) vorzusehen, umfaßt;

Detektieren nur einer ungeraden Harmonischen des Ausgangssignals.

20. Verfahren zur Herstellung eines Rotationsfühlers nach Anspruch 19, dadurch gekennzeichnet, daß der Schritt des Einfügens des Polarisationsreglers (36) umfaßt:

Bilden einer Vielzahl von Spulen in dem kontinuierlichen Faserstrang (12), welche Durchmesser haben, die ausreichend klein sind, daß eine spannungsinduzierte Doppelbrechung erzeugt wird, um die Polarisation der gegenläufigen Wellen zu steuern.

**Revendications**

1. Détecteur optique de rotation entièrement à fibre optique, comprenant:

# EP 0 075 013 B1

une source de lumière (10) émettant une onde lumineuse;

un guide d'onde à fibre optique (12) ayant une portion linéaire (32A) et une portion en forme de boucle (14), ladite source de lumière (10) étant optiquement couplée à ladite portion linéaire (12A) afin que ladite onde lumineuse se propage à travers ladite portion linéaire (12A) jusqu'à ladite portion en forme de boucle (14);

un premier coupleur directionnel à fibre optique à champ évanescent (34), couplé entre ladite source de lumière (10) et ladite portion en forme de boucle (14), ledit premier coupleur (34) fermant ladite portion en forme de boucle (14) et couplant ensemble ladite portion en forme de boucle (14) et ladite portion linéaire (12A);

une portion dudit guide d'onde à fibre optique (12) formant un contrôleur de polarisation (36) permettant le contrôle de la polarisation de la lumière se propageant dans ladite portion en forme de boucle (14);

un polariseur (32) polarisant la lumière se propageant à travers ledit guide d'onde à fibre optique (12) dans un état de polarisation présélectionné;

moyens de couplage de la lumière (26, 120) à partir d'une portion linéaire supplémentaire (12C) permettant l'obtention d'un signal de sortie indicatif de la vitesse de rotation de ladite portion en forme de boucle (14), ledit polariseur (32) transmettant seulement la fraction de ladite lumière couplée à ladite portion linéaire supplémentaire (12C) provenant de ladite portion en forme de boucle (14) par ledit coupleur directionnel (34), ladite fraction de ladite lumière ayant un chemin optique identique à travers ladite portion en forme de boucle (14) jusqu'auxdits moyens de couplage (26, 120), de façon à éliminer les différences de phase induites de manière non rotationelle;

un modulateur de phase (38) permettant la modulation de la phase de la lumière dans ladite portion en forme de boucle (14) à une fréquence spécifique;

un détecteur (19), positionné pour recevoir ledit signal de sortie provenant desdits moyens de couplage (26, 120) permettant la détection dudit signal de sortie afin de déterminer la vitesse de rotation de ladite portion en forme de boucle (14);

ledit détecteur optique de rotation étant caractérisé en ce que ledit guide d'onde à fibre optique (12) comprend un tronçon de fibre optique unique, continu, ininterrompu (12A, 12B, 12C, 12D, 14), ledit tronçon de fibre optique unique, continu, ininterrompu (12) ayant une portion du revêtement enlevée sur un côté afin de former une première surface ovale, ledit polariseur (32) comprenant un cristal biréfringent en juxtaposition contre ladite première surface ovale afin de polariser linéairement la lumière se propageant à travers ledit tronçon (12), et en ce que ledit modulateur de phase introduit en outre une modulation d'amplitude dans la lumière se propageant à travers ladite portion en forme de boucle (14), ladite fréquence spécifique étant choisie de manière à éliminer les erreurs dans le signal de sortie obtenu par l'amplitude de modulation, et en ce que ledit détecteur de rotation optique comprend en outre un système de detection permettant de détecter seulement une harmonique impaire du signal de sortie, ladite fréquence spécifique permettant l'annulation des composantes fréquentielles dans l'amplitude de modulation correspondant à l'harmonique impaire.

2. Détecteur de rotation selon la revendication 1, caractérisé en ce que ledit tronçon de fibre optique unique, continu, ininterrompu (12) a une portion du revêtement enlevée sur un côté de ladite fibre aux extrémités de ladite portion en forme de boucle (14) de manière à former des seconde et troisième surfaces ovales, lesdites seconde et troisième surfaces ovales étant en juxtaposition et fermant optiquement ladite portion en forme de boucle (14) de façon à former ledit coupleur directionnel.

3. Détecteur de rotation selon la revendication 1 ou 2, caractérisé en ce que lesdits moyens de couplage comprennent un isolateur optique (120).

4. Détecteur de rotation selon la revendication 1 ou 2, caractérisé en ce que lesdits moyens de couplage comprennent un second coupleur directionnel à fibre optique à champ évanescent (26).

5. Détecteur de rotation selon l'une quelconque des revendications 1 à 4, caractérisé en outre par des moyens de guidage dudit signal de sortie à partir desdits moyens de couplage (26, 120) jusqu'au détecteur (30).

6. Détecteur de rotation selon la revendication 5, caractérisé en ce que lesdits moyens de guidage comprennent une lentille (126).

7. Détecteur de rotation selon la revendication 5, caractérisé en ce que lesdits moyens de guidage comprennent une fibre optique (28).

8. Détecteur de rotation selon l'une quelconque des revendications 1 à 7, caractérisé en ce que ladite portion en forme de boucle (14) est enroulée autour d'un support de manière à former une pluralité de spires, les spires centrales étant positionnées vers l'intérieur adjacentes au support et les spires situées aux extrémités de ladite portion en forme de boucle (14) étant positionnées vers l'extérieur loin du support, de telle sorte que les deux portions d'extrémité du tronçon en forme de boucle (14) sont positionnées symétriquement par rapport aux spires centrales et sont d'accès aisé à l'extérieur de ladite portion en forme de boucle (14).

9. Détecteur de rotation selon l'une quelconque des revendications 1 à 8, caractérisé en ce que ladite fréquence spécifique est égale à C/2nL, L étant la longueur différentielle mesurée le long de la fibre entre (a) le modulateur de phase (38) et une extrémité de ladite portion en forme de boucle (14) et (b) le modulateur

20

de phase (38) et l'autre extrémité de ladite portion en forme de boucle (14), C étant la vitesse de la lumière dans le vide, et n étant l'indice de réfraction équivalent pour ladite fibre optique (12).

10. Détecteur de rotation selon l'une quelconque des revendications 1 à 9, caractérisé en ce que ladite modulation d'amplitude est créée directement par ledit modulateur de phase (38).

11. Détecteur de rotation selon l'une quelconque des revendications 1 à 9, caractérisé en ce que ladite modulation d'amplitude est créée par modulation de polarization induite par ledit modulateur de phase (38).

12. Détecteur de rotation selon l'une quelconque des revendications 1 à 11, caractérisé en ce que ledit système de détection détecte seulement la fréquence fondamentale dudit signal de sortie.

13. Détecteur de rotation selon l'une quelconque des revendications 1 à 12, caractérisé en ce que ledit système de détection comprend un amplificateur (46) permettant d'obtenir une caractéristique de filtre à bande passante étroite à ladite fréquence spécifique.

14. Détecteur de rotation selon la revendication 13, caractérisé en ce que ledit système de détection comprend un amplificateur de verrouillage (46) synchronisé avec ledit modulateur de phase (38).

15. Détecteur de rotation selon la revendication 9, caractérisé en ce que ladite fréquence spécifique est choisie par rapport à ladite longueur L, afin de produire une différence de phase de modulation de 180° entre les ondes de lumière se propageant à travers ladite portion en forme de boucle (14).

16. Détecteur de rotation selon l'une quelconque des revendications 1 à 15, caractérisé en outre par un écran (110) permettant de protéger ladite portion en forme de boucle (14) faite de fibre optique du champ magnétique ambiant de façon à réduire les effects du champ magnétique sur la lumière se propageant à travers ladite portion en forme de boucle (14).

17. Détecteur de rotation selon la revendication 16, caractérisé en ce que ledit écran (110) comprend un boîtier (11) pour ladite portion en forme de boucle (14), le boîtier (11) étant fait d'une matière ayant une perméabilité magnétique élevée.

18. Détecteur de rotation selon l'une quelconque des revendications 1 à 17, caractérisé en ce qu'une portion de ladite portion en forme de boucle (14) forme une pluralité de spires, le diamètre desdites spires étant choisie façon à exercer une pression sur ladite fibre de manière à obtenir un milieu biréfringent formant ledit contrôleur de polarisation (36) susceptible de contrôler la polarisation de la lumière se propageant dans ladite portion en forme de boucle (14).

19. Méthode de fabrication d'un détecteur de rotation comprenant les étapes suivantes:
l'obtention d'un guide d'onde à fibre optique (12);
l'obtention d'un premier coupleur directionnel à fibre optique à champ évanescent;
l'enlèvement d'une partie du revêtement dudit guide d'onde à fibre optique en trois endroits au moins le long dudit guide d'onde à fribre optique (12) afin de former trois zones de couplage au moins;
la juxtaposition de deux desdites zones de couplage permettant de former une boucle fermée (14) dans ledit guide d'onde à fibre optique (12);
le couplage d'une source de lumière (10) audit guide d'onde à fibre optique permettant la propagation de la lumière jusqu'à ladite boucle (14) de façon à former une paire d'ondes qui circulent dans des directions opposées dans ladite boucle (14);
l'insertion d'un contrôleur de polarisation dans la boucle permettant du contrôler la polarisation de la paire d'ondes circulant dans des directions opposées dans ladite boucle (14);
l'obtention d'un polariseur (32) permettant la polarisation de la lumière se propageant à travers ledit guide d'onde à fibre optique dans un état de polarisation préselectionné;
l'obtention d'un modulateur de phase (38) permettant la modulation de la phase de la lumière dans ladite boucle (14) à une fréquence spécifique;
le positionnement d'un détecteur (30) permettant la détection de la différence de phase entre les fractions desdites ondes circulant dans des directions opposées dont les longueurs de chemin optique autour de la boucle (14) sont identiques, et entre ces fractions seulement, ledit positionnement permettant aussi l'obtention d'un signal de sortie indicatif de la vitesse de rotation de ladite boucle (14);
caractérisée en ce que l'étape d'obtention dudit guide d'onde à fibre optique comprend l'obtention d'un tronçon de fibre optique unique, continu et ininterrompu;
en ce que l'étape d'obtention dudit polariseur (32) comprend la juxtaposition d'un cristal birefringent contre la troisième desdites zones de couplage afin de permettre la polarisation linéaire de la lumière se propageant à travers ledit tronçon;
en ce que l'étape d'obtention dudit modulateur de phase (38) comprend la sélection d'une fréquence spécifique permettant l'élimination d'erreurs dans le signal de sortie créé par la modulation d'amplitude introduit par ledit modulateur de phase; et
en ce que l'étape d'obtention dudit détecteur (10) comprend la détection de l'harmonique impaire dans le signal de sortie seulement.

20. Méthode de fabrication d'un détecteur de rotation selon la revendication 19, caractérisée en ce que l'étape d'insertion du contrôleur de polarisation (36) comprend la formation d'une pluralité de spires dans ledit tronçon de fibre continu (12), le diamètre de ces spires étant suffisamment réduit pour produire un effet de biréfringence induit par pression en vue de contrôler la polarisation desdites ondes se propageant dans des directions opposées.

Fig.1

Fig. 2

Fig. 3

Fig. 4

*Fig. 5*

*Fig. 6*

Fig. 7

Fig. 8

4

$I_T$

INTENSITY
MEASURED
BY DETECTOR

80

96

$\phi_W$

98

$\phi_{WS}$

$\phi_{WM}$

94

Z

t

t

Fig. 9

AMPLIFIER
OUTPUT SIGNAL

102

100

$\phi_{WS}$

Fig. 10

5

*110*

*116*

*48*

*39*

*112*

*114*

*114*

*Fig. 12*

*12*

*45°*

*WS*

*120*

*WS*

*WS*

*124*

*122*

*10*

*Fig. 14*

*45°*

*WO*

*120*

*124*

*Fig. 15*

*WO*

*122*

*118*

*36*

*14*

*12*

*W1*

*WO*

*10*

*Fig. 11*

*34*

*W2*

*118*

*117*

Fig. 13

Fig. 16

Fig. 17

8